# EUROPEAN PATENT APPLICATION

(11) **EP 4 834 632 A1**
(43) Date of publication of application: **04.11.2026**
(21) Application number: 24912185.6
(22) Date of filing: 28.11.2024
(51) Int. Cl.: B60K 17/28, B60K 1/00, B60K 17/12, B60K 17/22, B60K 25/00, B60K 25/06, B62D 21/00, B62D 49/00

(54) **ELECTRIC TRACTOR**

(30) Priority: 27.12.2023 JP 2023221676; 27.12.2023 JP 2023221677
(71) Applicant: KUBOTA CORPORATION, Osaka-shi, Osaka 530-0011 (JP)
(72) Inventor: INABA Daisuke, Sakai-shi, Osaka 590-0908 (JP); HISAE Takayuki, Sakai-shi, Osaka 590-0908 (JP); SERA Takashi, Sakai-shi, Osaka 590-0908 (JP); MORIOKA Daichi, Sakai-shi, Osaka 590-0908 (JP); KUNIKATA Masaki, Sakai-shi, Osaka 590-0908 (JP)
(74) Representative: Müller-Boré & Partner Patentanwälte PartG mbB
(86) International application number: PCT/JP2024/042096
(87) International publication number: WO 2025/142295

(57) **Abstract**

An electric tractor includes a first electric motor 11 having an output shaft 11b facing rearward, and a second electric motor 12 having an output shaft 12b facing rearward. The electric tractor includes a transmission case 6 that is provided rearward of the first electric motor 11 and the second electric motor 12, and to which a rear travel apparatus is attached. The first electric motor 11 and the second electric motor 12 are arranged side by side along a left-right direction, and the front-wheel transmission shaft 31 extends frontward from the transmission case 6, passing between the output shaft 11b of the first electric motor 11 and the output shaft 12b of the second electric motor 12 in a plan view.

## Description

### Technical Field

The present invention relates to a configuration of front wheels, and transmission structures for a travel system and a PTO system in an electric tractor.

### Background Art

Some tractors, as disclosed in Patent Document 1, are provided with an engine serving as a motive power source.

In Patent Document 1, a driving section to be occupied by an operator is provided on a body provided with front wheels and rear wheels. An engine is provided frontward of the driving section, a front axle case to which the front wheels are attached is provided below the engine, and a transmission case to which the rear wheels are attached is provided below the driving section. A transmission shaft is connected between the engine and the transmission case, and a front-wheel transmission shaft is connected between the transmission case and the front axle case.

In Patent Document 1, the motive power of the engine is transmitted via a transmission shaft to a travel transmission inside the transmission case, and is transmitted from the transmission to the rear wheels. Motive power branched from the transmission is transmitted to the front wheels via the front-wheel transmission shaft.

Inside the transmission case, the motive power of the engine is branched and transmitted to a PTO shaft, and the motive power of the PTO shaft is transmitted to a work apparatus equipped on the tractor. The motive power of the engine drives a hydraulic pump, and hydraulic fluid of the hydraulic pump is supplied to a hydraulic device included on the tractor and a hydraulically operated work apparatus equipped on the tractor.

### Prior Art Document

### Patent Document

Patent Document 1: JP 2011-88523A

### Disclosure of the Invention

### Problem to be Solved by the Invention

For tractors, electric tractors have been proposed that are equipped with an electric motor that generates motive power for traveling, and an electric motor that generates motive power and hydraulic pressure for operating an equipped work apparatus.

A first object of the present invention is to compactly provide a front-wheel transmission shaft in an electric tractor. In addition, a second object of the present invention is to provide well-balanced transmission structures for a travel system and a PTO system in an electric tractor.

### Means for Solving Problem

In order to achieve the first object, an electric tractor of the present invention includes: a first electric motor having an output shaft facing rearward; a second electric motor having an output shaft facing rearward; a front wheel for traveling provided frontward of the first electric motor and the second electric motor; a transmission case provided rearward of the first electric motor and the second electric motor, and to which a rear travel apparatus is attached; a transmission mechanism provided inside the transmission case and configured to transmit transmitted motive power to the travel apparatus; and a front-wheel transmission shaft configured to transmit motive power branched from the transmission mechanism to the front wheel, the first electric motor and the second electric motor being arranged side by side along a left-right direction, and the front-wheel transmission shaft extending frontward from the transmission case, passing between the output shaft of the first electric motor and the output shaft of the second electric motor in a plan view.

According to the present invention, due to the first electric motor and the second electric motor being arranged side by side along the left-right direction, the first electric motor and the second electric motor are provided at approximately the same position in the front-rear direction and at approximately the same height in the up-down direction. For this reason, a favorable weight balance is obtained in the electric tractor, and the travel performance of the electric tractor is improved.

According to the present invention, in the above-described state, the front-wheel transmission shaft that transmits motive power to the front wheel extends frontward from the transmission case, passing between the output shaft of the first electric motor and the output shaft of the second electric motor in a plan view.

Since the front-wheel transmission shaft passes through the space where the first electric motor and the second electric motor are provided, the space where the first electric motor and the second electric motor are provided is effectively utilized, and thus the front-wheel transmission shaft is installed compactly.

In the present invention, it is preferable that the first electric motor generates motive power for traveling, and the second electric motor generates motive power and hydraulic pressure for operating an equipped work apparatus.

According to the present invention, the electric tractor travels with use of the motive power of the first electric motor, and the work apparatus operates with use of the motive power of the second electric motor. By separately providing the first electric motor for traveling and the second electric motor for operating the work apparatus, the work apparatus can be operated with less influence from fluctuations in the load during traveling, and the electric tractor can travel with less influence from fluctuations in the load applied to the work apparatus.

In the present invention, it is preferable that the front-wheel transmission shaft is provided at a height overlapping with the first electric motor and the second electric motor in a side view.

According to the present invention, the front-wheel transmission shaft is provided at a height overlapping with the first electric motor and the second electric motor in a side view, thereby effectively utilizing the space in which the first electric motor and the second electric motor are provided, which is advantageous in terms of compactly providing the front-wheel transmission shaft.

In the present invention, it is preferable to include a housing frame housing the first electric motor and the second electric motor, in which the front-wheel transmission shaft passes through a front portion and a rear portion of the housing frame, and at least either the front portion or the rear portion of the housing frame is provided with a bearing portion that supports the front-wheel transmission shaft.

According to the present invention, when the housing frame that houses the first electric motor and the second electric motor is provided, the front-wheel transmission shaft passes through the front portion and the rear portion of the housing frame. The front-wheel transmission shaft is stably supported by the bearing portion provided at the front portion (rear portion) of the housing frame.

According to the present invention, the bearing portion is provided at the front portion (rear portion) of the housing frame, whereby the front portion (rear portion) of the housing frame also serves as an attachment member for the bearing portion. For this reason, the structure can be simplified.

In the present invention, it is preferable to include an upper frame provided above the front-wheel transmission shaft and coupled along the front-rear direction between the front portion and the rear portion of the housing frame.

According to the present invention, when the front-wheel transmission shaft passes through the front portion and the rear portion of the housing frame that houses the first electric motor and the second electric motor, the upper frame is provided above the front-wheel transmission shaft and is coupled along the front-rear direction between the front portion and the rear portion of the housing frame.

As a result, the housing frame is reinforced and the rigidity of the housing frame is improved. Improving the rigidity of the housing frame is advantageous in terms of stably supporting the front-wheel transmission shaft.

In the present invention, it is preferable to include a lower frame provided below the front-wheel transmission shaft and coupled along the left-right direction between the right portion and the left portion of the housing frame.

According to the present invention, when the front-wheel transmission shaft passes through the front portion and the rear portion of the housing frame that houses the first electric motor and the second electric motor, the lower frame is provided below the front-wheel transmission shaft and is coupled along the left-right direction between the right portion and the left portion of the housing frame.

As a result, the housing frame is reinforced and the rigidity of the housing frame is improved. Improving the rigidity of the housing frame is advantageous in terms of stably supporting the front-wheel transmission shaft.

In order to achieve the second object, an electric tractor of the present invention includes: a first electric motor configured to generate motive power for traveling, and having an output shaft facing rearward; and a second electric motor configured to generates motive power and hydraulic pressure for operating an equipped work apparatus, and having an output shaft facing rearward, the first electric motor and the second electric motor being arranged side by side along a left-right direction, the electric tractor further including a transmission case provided rearward of the first electric motor and the second electric motor, and to which a rear travel apparatus is attached, and inside the transmission case, the electric tractor further including: a travel transmission shaft that is provided along a front-rear direction between a first virtual line extending rearward from the output shaft of the first electric motor and a second virtual line extending rearward from the output shaft of the second electric motor in a plan view, and is configured to transmit motive power to the travel apparatus; a PTO transmission shaft that is provided along the front-rear direction at a position above or below the travel transmission shaft between the first virtual line and the second virtual line in a plan view, and is configured to transmit motive power to the work apparatus; a first transmission mechanism configured to transmit the motive power of the output shaft of the first electric motor toward a center in the left-right direction of the transmission case and then to the travel transmission shaft; and a second transmission mechanism configured to transmit the motive power of the output shaft of the second electric motor toward the center in the left-right direction of the transmission case and then to the PTO transmission shaft.

According to the present invention, the first electric motor and the second electric motor are provided side by side along the left-right direction, whereby the first electric motor and the second electric motor are provided at approximately the same position in the front-rear direction and at approximately the same height in the up-down direction. For this reason, a favorable weight balance is obtained in the electric tractor, and the travel performance of the electric tractor is improved.

According to the present invention, the transmission case to which the rear travel apparatus is attached is provided rearward of the first electric motor and the second electric motor. Inside the transmission case, the travel transmission shaft that transmits motive power to the travel apparatus and the PTO transmission shaft that transmits motive power to the work apparatus are provided along the front-rear direction and are provided side by side along the up-down direction.

If the first virtual line extending rearward from the output shaft of the first electric motor and the second virtual line extending rearward from the output shaft of the second electric motor are envisioned, the travel transmission shaft and the PTO transmission shaft are provided between the first virtual line and the second virtual line in a plan view.

As a result, a smaller width in the left-right direction of the transmission case can be achieved.

Providing the first electric motor and the second electric motor side by side along the left-right direction suppresses the length in the front-rear direction of the first electric motor and the second electric motor. In contrast, the width in the left-right direction of the first electric motor and the second electric motor increases.

According to the present invention, a transmission case with a smaller width in the left-right direction is provided rearward of the first electric motor and the second electric motor, which have a large width in the left-right direction. As a result, the first electric motor and the second electric motor are easily provided frontward of the rear travel apparatus in a side view, without interfering with the rear travel apparatus.

According to the present invention, in the first electric motor and the second electric motor having a large width in the left-right direction, and in the transmission case having a small width in the left-right direction, the motive power of the output shaft of the first electric motor is transmitted by the first transmission mechanism toward the center in the left-right direction of the transmission case and then to the travel transmission shaft. The motive power of the output shaft of the second electric motor is transmitted by the second transmission mechanism toward the center in the left-right direction of the transmission case and then to the PTO transmission shaft.

As a result, even with the first electric motor and the second electric motor having a large width in the left-right direction and the transmission case having a small width in the left-right direction, the motive power of the output shafts of the first electric motor and the second electric motor is transmitted smoothly to the travel transmission shaft and the PTO transmission shaft.

In the present invention, it is preferable that in a rear portion of the transmission case that houses the travel transmission shaft and the PTO transmission shaft, and in a front portion of the transmission case that houses the first transmission mechanism and the second transmission mechanism, a width in the left-right direction of the rear portion of the transmission case is smaller than a width in the left-right direction of the front portion of the transmission case.

Since the first transmission mechanism and the second transmission mechanism transmit the motive power of the output shafts of the first electric motor and the second electric motor toward the center in the left-right direction of the transmission case, a space having a large width in the left-right direction is required for the arrangement of the first transmission mechanism and the second transmission mechanism.

According to the present invention, the first transmission mechanism and the second transmission mechanism are housed in the front portion of the transmission case, which has a large width in the left-right direction, while the travel transmission shaft and the PTO transmission shaft, which do not require a large width in the left-right direction, are housed in the rear portion of the transmission case, which has a small width in the left-right direction.

As a result, the first transmission mechanism, the second transmission mechanism, the travel transmission shaft, and the PTO transmission shaft are housed comfortably within the transmission case.

In the present invention, it is preferable that inside the transmission case, the electric tractor further includes: a travel relay shaft provided along a front-rear direction between the first virtual line and the second virtual line in a plan view; and a transmission provided across the travel relay shaft and the travel transmission shaft, and the motive power of the output shaft of the first electric motor is transmitted from the first transmission mechanism to the travel relay shaft, and is transmitted from the travel relay shaft to the travel transmission shaft through the transmission.

According to the present invention, the rotation speed of the output shaft of the first electric motor is changed, whereby the speed of the motive power transmitted to the travel transmission shaft is changed and the travel speed of the electric tractor is changed. In this case, in order to widen the speed-change range of the first electric motor, the transmission is provided inside the transmission case, and the travel relay shaft for providing the transmission is also provided inside the transmission case.

According to the present invention, inside the transmission case, in a plan view, the travel relay shaft is provided along the front-rear direction between the first virtual line and the second virtual line, and the transmission is provided across the travel relay shaft and the travel transmission shaft. The motive power of the output shaft of the first electric motor is transmitted from the first transmission mechanism to the travel relay shaft, and is transmitted from the travel relay shaft to the travel transmission shaft through the transmission.

As a result, the travel relay shaft and the transmission are provided between the first virtual line and the second virtual line in a plan view, which is advantageous in terms of reducing the width in the left-right direction of the transmission case.

In the present invention, it is preferable that the travel relay shaft is provided between the first virtual line and the travel transmission shaft in a plan view.

According to the present invention, in the space between the first virtual line and the second virtual line in a plan view, the travel relay shaft is provided between the first virtual line and the travel transmission shaft, and is provided at a position near the output shaft of the first electric motor.

As a result, the first transmission mechanism, which transmits the motive power of the output shaft of the first electric motor to the travel relay shaft, is configured compactly.

In the present invention, it is preferable that inside the transmission case, the electric tractor further includes a front-wheel transmission shaft that is provided along a front-rear direction at a position above or below the travel transmission shaft between the first virtual line and the second virtual line in a plan view, and is configured to transmit motive power to a front wheel for traveling, and the motive power of the travel transmission shaft is transmitted to the front-wheel transmission shaft.

In a tractor, if the front wheel is driven in addition to the rear travel apparatus, the front-wheel transmission shaft is provided, which transmits the motive power branched from the travel transmission shaft to the front wheel.

According to the present invention, inside the transmission case, the front-wheel transmission shaft is provided along the front-rear direction at a position above or below the travel transmission shaft between the first virtual line and the second virtual line in a plan view. The motive power of the travel transmission shaft is transmitted to the front-wheel transmission shaft, and is transmitted to the front wheel via the front-wheel transmission shaft.

As a result, the front-wheel transmission shaft is provided between the first virtual line and the second virtual line in a plan view, which is advantageous in terms of reducing the width in the left-right direction of the transmission case.

In the present invention, it is preferable that the PTO transmission shaft is provided below the travel transmission shaft, the front-wheel transmission shaft is provided below the PTO transmission shaft, the electric tractor further includes a travel relay gear rotatably attached to the PTO transmission shaft, and the motive power of the travel transmission shaft is transmitted to the travel relay gear, and is transmitted from the travel relay gear to the front-wheel transmission shaft.

In a tractor, the front-wheel transmission shaft is often provided at a relatively low position.

According to the present invention, the PTO transmission shaft is provided below the travel transmission shaft, and the front-wheel transmission shaft is provided below the PTO transmission shaft, which is suitable for a configuration in which the front-wheel transmission shaft is provided at a relatively low position.

According to the above-described configuration, the travel transmission shaft and the front-wheel transmission shaft are sometimes separated from each other in the up-down direction.

According to the present invention, the travel relay gear is rotatably attached to the PTO transmission shaft, and the motive power of the travel transmission shaft is transmitted to the travel relay gear, and is transmitted from the travel relay gear to the front-wheel transmission shaft.

As a result, even if the travel transmission shaft and the front-wheel transmission shaft are separated from each other in the up-down direction, the motive power of the travel transmission shaft is smoothly transmitted to the front-wheel transmission shaft.

In the present invention, it is preferable to include a mid-PTO shaft provided at a bottom portion of the transmission case, in which the PTO transmission shaft is provided below the travel transmission shaft, and the motive power of the PTO transmission shaft is transmitted to the mid-PTO shaft.

In a tractor, the mid-PTO shaft may be provided at the bottom portion of the transmission case, separate from the PTO transmission shaft, and the motive power of the PTO transmission shaft may be branched and transmitted to the mid-PTO shaft.

According to the present invention, the PTO transmission shaft is provided below the travel transmission shaft and is near the mid-PTO shaft. For this reason, the transmission structure in which the motive power of the PTO transmission shaft is transmitted to the mid-PTO shaft is configured compactly.

In the present invention, it is preferable that inside the transmission case, the electric tractor further comprises: a front-wheel transmission shaft that is provided along a front-rear direction at a position below the PTO transmission shaft, between the first virtual line and the second virtual line in a plan view, and is configured to transmit motive power to a front wheel for traveling; and a PTO relay gear rotatably attached to the front-wheel transmission shaft, the motive power of the travel transmission shaft is transmitted to the front-wheel transmission shaft, and the motive power of the PTO transmission shaft is transmitted to the PTO relay gear, and is transmitted from the PTO relay gear to the mid-PTO shaft.

In a tractor, if the front wheel is driven in addition to the rear travel apparatus, the front-wheel transmission shaft is provided, which transmits the motive power branched from the travel transmission shaft to the front wheel.

According to the present invention, inside the transmission case, the front-wheel transmission shaft is provided along the front-rear direction at a position below the PTO transmission shaft between the first virtual line and the second virtual line in a plan view. The motive power of the travel transmission shaft is transmitted to the front-wheel transmission shaft, and is transmitted to the front wheel via the front-wheel transmission shaft.

As a result, the front-wheel transmission shaft is provided between the first virtual line and the second virtual line in a plan view, which is advantageous in terms of reducing the width in the left-right direction of the transmission case.

If the mid-PTO shaft is provided at the bottom portion of the transmission case, the PTO transmission shaft and the mid-PTO shaft may be separated from each other in the up-down direction.

According to the present invention, the PTO relay gear is rotatably attached to the front-wheel transmission shaft, and the motive power of the PTO transmission shaft is transmitted to the PTO relay gear, and is transmitted from the PTO relay gear to the mid-PTO shaft.

As a result, the motive power of the PTO transmission shaft is smoothly transmitted to the mid-PTO shaft, even if the PTO transmission shaft and the mid-PTO shaft are separated from each other in the up-down direction.

### Brief Description of the Drawings

FIG. 1 is a diagram showing a first embodiment (hereinafter, the same applies up to FIG. 17), and is a left side view of an electric tractor.
FIG. 2 is a plan view of the electric tractor.
FIG. 3 is a left side view of the vicinity of a front frame, a housing frame, and a transmission case.
FIG. 4 is a plan view of the vicinity of the front frame, the housing frame, and the transmission case.
FIG. 5 is a plan view of the housing frame.
FIG. 6 is a bottom view of the housing frame.
FIG. 7 is a front view of the housing frame.
FIG. 8 is a rear view of the housing frame.
FIG. 9 is an exploded perspective view of the housing frame.
FIG. 10 is a left side view showing a coordination mechanism spanning between a brake pedal and a brake.
FIG. 11 is a rear view of the vicinity of a support frame to which a steering wheel and the like are attached.
FIG. 12 is a plan view showing the coordination mechanism spanning between the brake pedal and the brake.
FIG. 13 is a longitudinal cross-sectional front view showing the coordination mechanism spanning between the brake pedal and the brake.
FIG. 14 is a left side view of the electric tractor equipped with a front loader apparatus.
FIG. 15 is a plan view of the vicinity of the front frame, the housing frame, and the transmission case with the front loader apparatus equipped.
FIG. 16 is a left side view of the electric tractor equipped with the front loader apparatus and a backhoe apparatus.
FIG. 17 is a plan view of the vicinity of the front frame, the housing frame, and the transmission case with the front loader apparatus and the backhoe apparatus equipped.
FIG. 18 is a diagram showing a second embodiment (hereinafter, the same applies up to FIG. 29), and is a right side view of an electric tractor.
FIG. 19 is a plan view of the vicinity of a front frame, a housing frame, and a transmission case.
FIG. 20 is a plan view of the housing frame.
FIG. 21 is a bottom view of the housing frame.
FIG. 22 is a front view of the housing frame.
FIG. 23 is a rear view of the housing frame.
FIG. 24 is an exploded perspective view of the housing frame.
FIG. 25 is a schematic plan view showing a transmission system inside the transmission case.
FIG. 26 is a rear view showing the transmission system inside the transmission case.
FIG. 27 is a lateral cross-sectional plan view of the vicinity of a first part of the transmission case and a rear portion of the housing frame.
FIG. 28 is a right side view showing the transmission system inside the transmission case.
FIG. 29 is a left side view showing the transmission system inside the transmission case.

### Best Mode for Carrying out the Invention

### (First Embodiment)

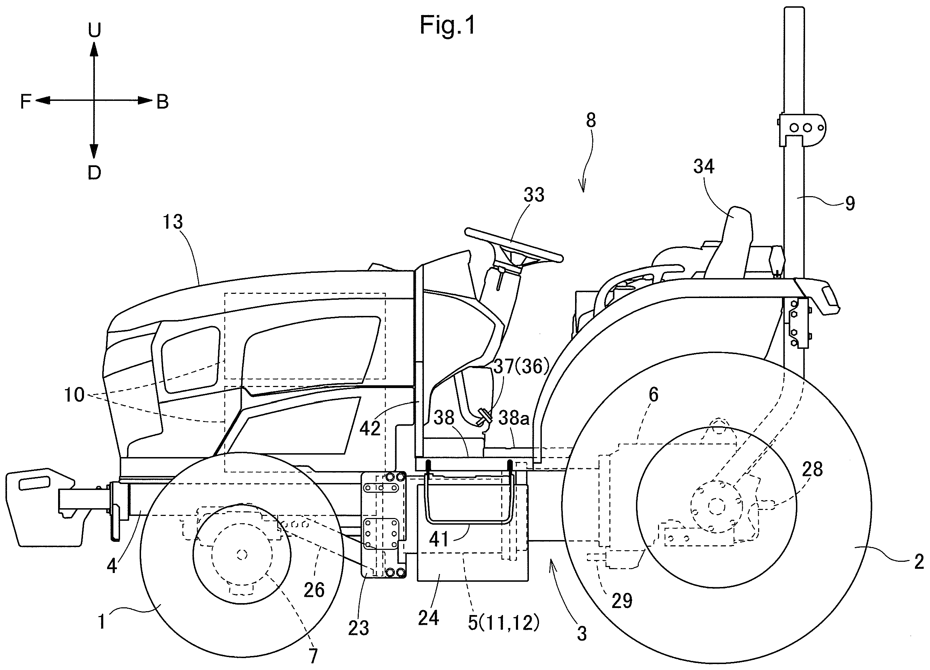

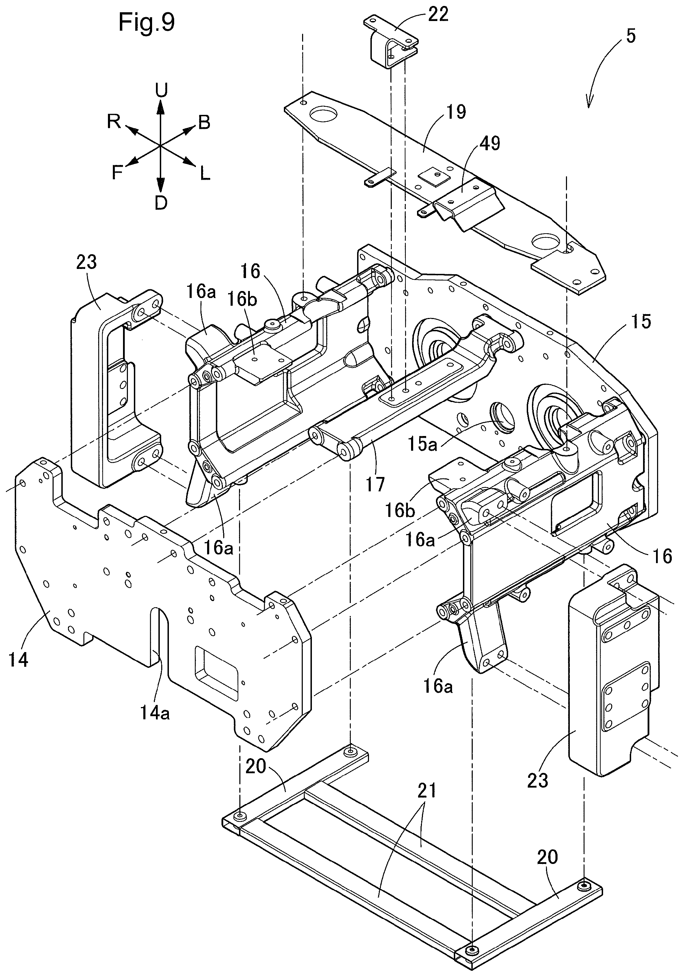

FIGS. 1 to 17 show an electric tractor according to a first embodiment of the present invention, with F indicating frontward, B indicating rearward, U indicating upward, D indicating downward, R indicating rightward, and L indicating leftward in FIGS. 1 to 17.

### (Overall Configuration of Electric Tractor)

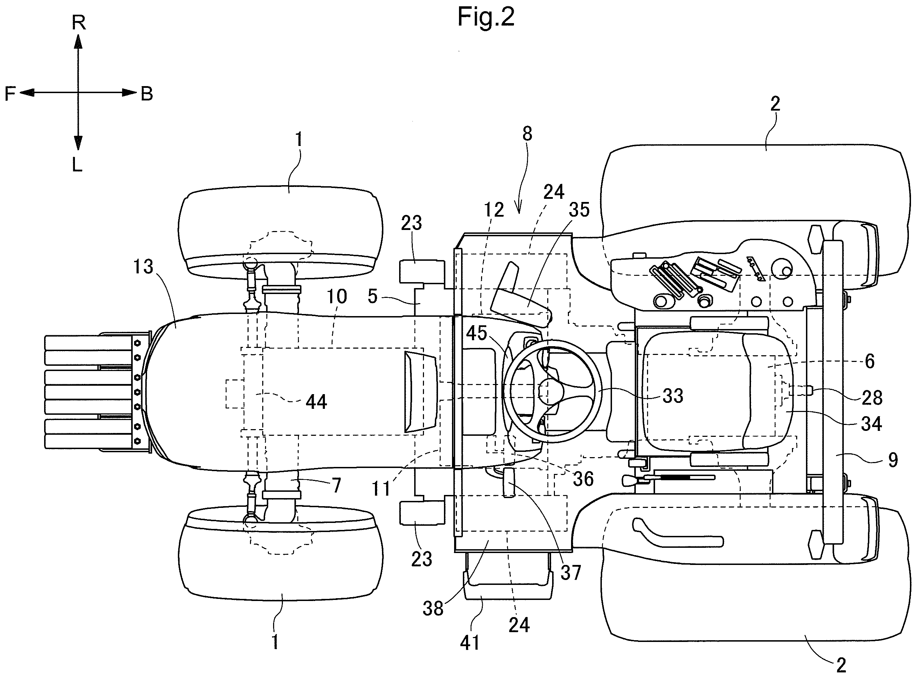

As shown in FIGS. 1 and 2, right and left front wheels 1 are provided at a front portion of a body 3, and right and left rear wheels 2 are provided at a rear portion of the body 3, with the body 3 being supported by the front wheels 1 and the rear wheels 2. In this case, the rear wheels 2 are a rear travel apparatus.

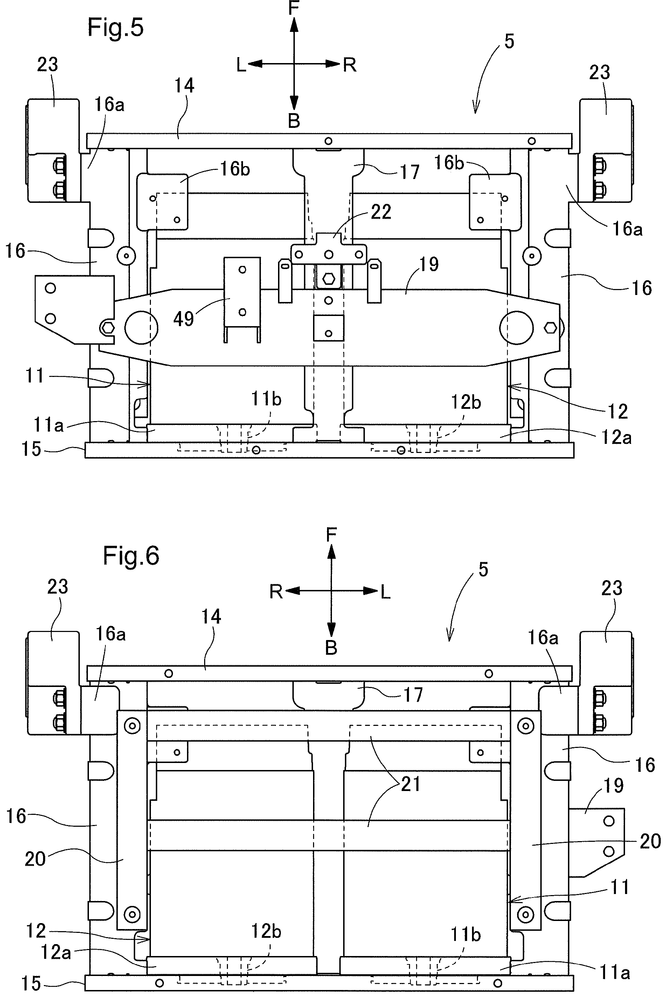

The body 3 has a front frame 4, a housing frame 5, and a transmission case 6. The front frame 4 is coupled to a front portion 14 (see FIGS. 5 to 9) of the housing frame 5, and the transmission case 6 is coupled to a rear portion 15 (see FIGS. 5 to 9) of the housing frame 5, thereby forming the body 3. The housing frame 5 houses a first electric motor 11 and a second electric motor 12, which serve as motive power sources. In this case, the front frame 4 is a first front frame.

A front axle case 7 is attached to the front frame 4, and the right and left front wheels 1 are attached to the front axle case 7. The right and left rear wheels 2 are attached to the transmission case 6.

A driving section 8 to be occupied by an operator is provided across the housing frame 5 and the transmission case 6. A ROPS frame 9 is attached to the transmission case 6 and extends upward, and is provided rearward of the driving section 8. A battery 10 that supplies power to the electric motors 11 and 12 is attached to the front frame 4, and a hood 13 covering the battery 10 is provided.

### (Configuration of Housing Frame)

As shown in FIGS. 5 to 9, the housing frame 5 has a front portion 14, a rear portion 15, a right lateral portion 16, a left lateral portion 16, frames 17, 19, 20, and 21, and the like. In this case, the right and left lateral portions 16 of the housing frame 5 are the right portion and the left portion of the housing frame 5.

The front portion 14 and the rear portion 15 are flat plates extending along the up-down direction and the left-right direction. The right and left lateral portions 16 are flat plates extending along the up-down direction and the front-rear direction, and are slightly curved. Front parts of the lateral portions 16 are coupled to a right part and a left part of a rear surface of the front portion 14, and rear parts of the lateral portions 16 are coupled to a right part and a left part of a front surface of the rear portion 15.

The frame 17 is coupled along the front-rear direction between a central part in the left-right direction of an upper part of the rear surface of the front portion 14 and a central part in the left-right direction of an upper part of the front surface of the rear portion 15. The frame 19 is coupled along the left-right direction between the upper parts of the right and left lateral portions 16. A bracket 22 is coupled between the frame 17 and the frame 19. In this case, the frame 17 is an upper frame of the housing frame 5.

The right and left frames 20 are coupled to the lower parts of the right and left lateral portions 16 along the front-rear direction. The frames 21 are coupled along the left-right direction between the right and left frames 20. A recess 14a that is open downward and faces upward is provided at a central part in the left-right direction of the lower part of the front portion 14. An opening 15a is provided at a central part in the left-right direction of the rear portion 15. In this case, the frames 21 are the lower frame of the housing frame 5.

### (Configuration for Housing Electric Motors in Housing Frame)

As shown in FIGS. 5 to 8, the electric motors 11 and 12 are provided side by side along the left-right direction inside the housing frame 5 (between the front portion 14 and the rear portion 15, between the right and left lateral portions 16, and between the frames 17 and 19 and the frames 21). The electric motors 11 and 12 are identical and have the same output.

A flange portion 11a at the rear end portion of the electric motor 11 is coupled to the left part of the front surface of the rear portion 15 of the housing frame 5. A flange portion 12a at the rear end portion of the electric motor 12 is coupled to the right part of the front surface of the rear portion 15 of the housing frame 5. Output shafts 11b and 12b of the electric motors 11 and 12 are provided facing rearward along the front-rear direction at the positions of the flange portions 11a and 12a of the electric motors 11 and 12.

Inside the housing frame 5, the electric motor 11 is provided leftward of the recess 14a in the front portion 14 and the opening 15a in the rear portion 15 of the housing frame 5. The electric motor 12 is provided rightward of the recess 14a in the front portion 14 and the opening 15a in the rear portion 15 of the housing frame 5.

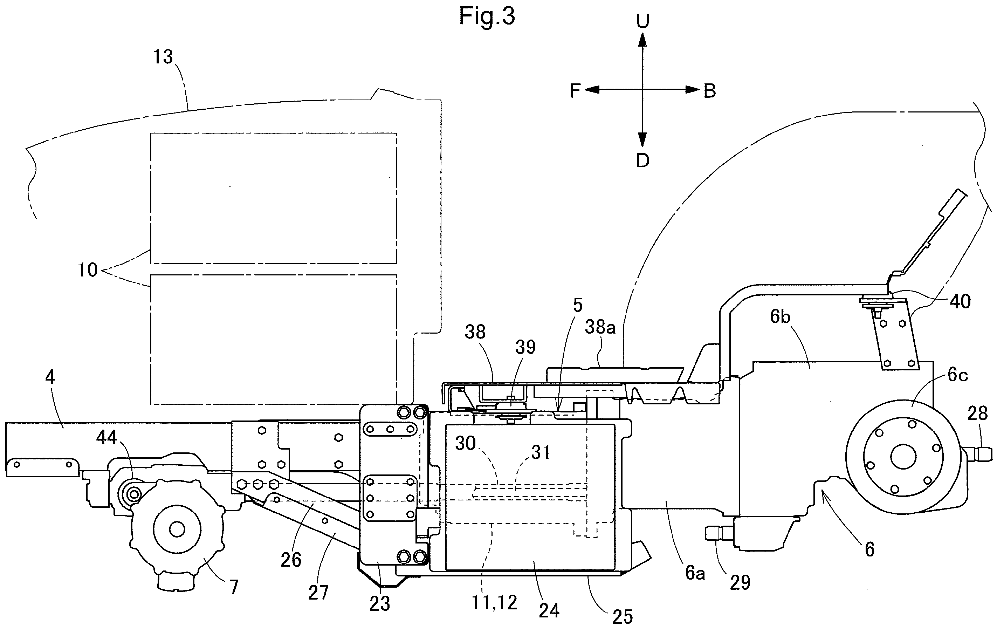

As shown in FIG. 3, a flat plate-shaped cover 25 is attached between the lower parts of the right and left lateral portions 16, which are the bottom portion of the housing frame 5, and is attached between the lower parts of the front portion 14 and the rear portion 15 of the housing frame 5. In this case, the cover 25 is an electric motor protection member.

### (Configuration of Attachment Portion for Attaching Work Apparatus, and Inverter)

As shown in FIGS. 5 to 9, on the right and left lateral portions 16 of the housing frame 5, upper attachment portions 16a are inclined upward on the upper parts of the front parts of the lateral portions 16, and lower attachment portions 16a are inclined downward on the lower parts of the front parts of the lateral portions 16.

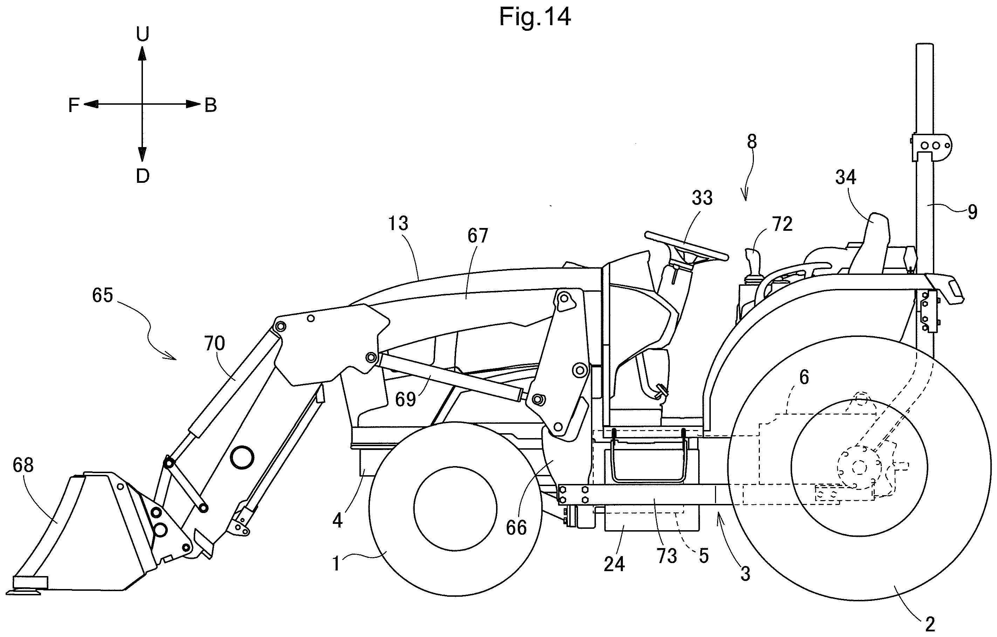

A right attachment portion 23 is coupled across the attachment portions 16a of the right lateral portion 16 of the housing frame 5. A left attachment portion 23 is coupled across the attachment portions 16a of the left lateral portion 16 of the housing frame 5. As will be described later, a work apparatus such as a front loader apparatus 65 (see FIG. 14) is attached to the right and left attachment portions 23.

As shown in FIGS. 1 to 4, right and left inverters 24 are attached to the right and left lateral portions 16 of the housing frame 5, and are provided rearward of the attachment portions 23. As will be described later, a speed change pedal 35 is provided in the driving section 8.

Power of the battery 10 is supplied to the left inverter 24, and based on an operation of the speed change pedal 35, the left inverter 24 converts the DC power of the battery 10 into AC power and supplies the result to the electric motor 11, whereby the electric motor 11 operates in both forward (forward motion of the electric tractor) and reverse (reverse motion of the electric tractor) directions.

Power of the battery 10 is supplied to the right inverter 24, and the right inverter 24 converts the DC power of the battery 10 into AC power and supplies the result to the electric motor 12, whereby the electric motor 12 operates. As described later, the electric motor 12 drives the hydraulic pump (not shown), and therefore the electric motor 12 operates in the forward direction and does not operate in the reverse direction.

### (Configuration of Front Frame and Front Axle Case)

As shown in FIGS. 1, 3, and 4, the right and left front frames 4 are provided, and the front frames 4 are coupled to the upper part of the front surface of the front portion 14 (see FIGS. 5 to 9) of the housing frame 5 and extend frontward.

Right and left front frames 26 are provided. At the lower part of the front surface of the front portion 14 (see FIGS. 5 to 9) of the housing frame 5, the rear portions of the front frames 26 are coupled to the lower parts of the front frames 4, and the front portions of the front frames 26 are coupled to intermediate portions in the front-rear direction of the front frames 4. In this case, the front frames 26 are second front frames.

The battery 10 is attached to the upper portions of the front frames 4, and the rear end portion of the battery 10 is provided frontward of the front end portions of the electric motors 11 and 12. The front axle case 7 (front wheels 1) is rollably attached to the lower portions of the front portions of the front frames 4, and is provided below the battery 10 and frontward of the electric motors 11 and 12.

A flat plate-shaped cover 27 is attached across the right and left front frames 26. In a side view, the front frames 26 and the cover 27 have a front-rising inclined orientation, with the front portions of the front frames 26 and the cover 27 being higher than the rear portions of the front frames 26 and the cover 27. In this case, the cover 27 is a front-wheel transmission shaft protection member.

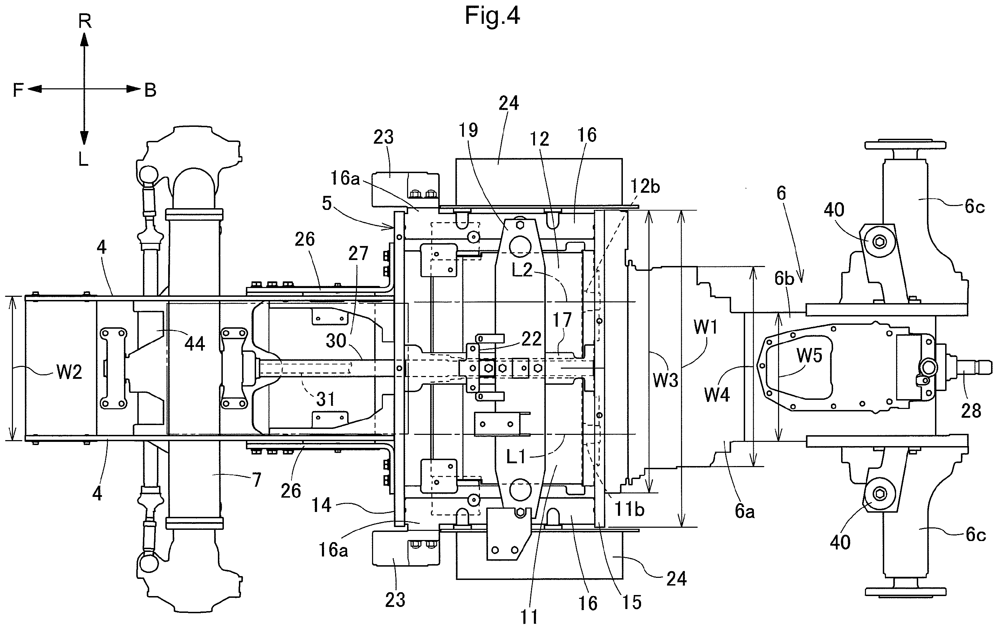

As shown in FIG. 4, the right and left front frames 4 and 26 and the cover 27 have the same width W2 in the left-right direction. A width W1 in the left-right direction of the housing frame 5 is greater than the width W2 in the left-right direction of the right and left front frames 4 and 26 and the cover 27.

In a plan view, the output shaft 11b of the electric motor 11 is located at the position of a virtual line L1 extending rearward from the left front frames 4 and 26. The output shaft 12b of the electric motor 12 is provided at the position of a virtual line L2 extending rearward from the right front frames 4 and 26. As a result, the width W2 in the left-right direction between the right and left front frames 4 and 26 and the cover 27 is approximately the same as the width (interval) in the left-right direction of the output shafts 11b and 12b of the electric motors 11 and 12.

### (Configuration of Transmission Case)

As shown in FIGS. 3 and 4, the transmission case 6 has a front portion 6a, a rear portion 6b, and right and left rear axle cases 6c, and the right and left rear wheels 2 are attached to the rear axle cases 6c of the transmission case 6. The front portion 6a of the transmission case 6 is coupled to the rear surface of the rear portion 15 of the housing frame 5, and the transmission case 6 is provided rearward of the electric motors 11 and 12.

The width W1 in the left-right direction of the housing frame 5 is greater than widths W3 and W4 in the left-right direction of the front portion 6a of the transmission case 6. The widths W3 and W4 in the left-right direction of the front portion 6a of the transmission case 6 are greater than a width W5 in the left-right direction of the rear portion 6b of the transmission case 6.

A hydraulic multi-plate travel clutch (not shown), an auxiliary transmission (not shown), and a rear-wheel differential apparatus (not shown) are provided inside the transmission case 6. The auxiliary transmission is configured as a gear-shift type and can shift between two gears, namely a high gear and a low gear. The motive power of the output shaft 11b of the electric motor 11 is transmitted to the travel clutch, is transmitted from the travel clutch to the auxiliary transmission, and is transmitted from the auxiliary transmission to the rear wheels 2 via the rear-wheel differential apparatus. In this case, the hydraulic multi-plate travel clutch, the auxiliary transmission, and the rear-wheel differential apparatus are a transmission mechanism.

Inside the transmission case 6, motive power branched from between the auxiliary transmission and the rear-wheel differential apparatus is transmitted to a later-described front-wheel transmission shaft 31, is transmitted from the front-wheel transmission shaft 31 to the front-wheel differential apparatus (not shown) inside the front axle case 7, and is transmitted from the front-wheel differential apparatus to the front wheels 1.

A PTO shaft 28 is provided facing rearward at the rear portion 6b of the transmission case 6, and a mid-PTO shaft 29 is provided facing frontward at the bottom portion of the rear portion 6b of the transmission case 6. A hydraulic multi-plate PTO clutch (not shown) and a PTO transmission system (not shown) are provided inside the transmission case 6. The motive power of the output shaft 12b of the electric motor 12 is transmitted to the PTO clutch, is transmitted from the PTO clutch to the PTO transmission system, and is transmitted from the PTO transmission system to the PTO shaft 28 and the mid-PTO shaft 29. In this case, the PTO clutch and the PTO transmission system are a transmission mechanism.

In the electric tractor, when a work apparatus such as a rotary tilling apparatus (not shown) is attached to the rear portion of the body 3, the motive power of the PTO shaft 28 is transmitted to the work apparatus. When a work apparatus such as a mower (not shown) is attached on the lower portion of the body 3 between the front wheels 1 and the rear wheels 2, the motive power of the mid-PTO shaft 29 is transmitted to the work apparatus.

### (Configuration of Front-Wheel Transmission Shaft)

As shown in FIGS. 3 and 4, a pipe member 30 is coupled along the front-rear direction, between the rear portion 15 of the housing frame 5 and the front axle case 7. The above-described front-wheel transmission shaft 31 is provided inside the pipe member 30 and is coupled between the inside of the transmission case 6 and the front-wheel differential apparatus of the front axle case 7.

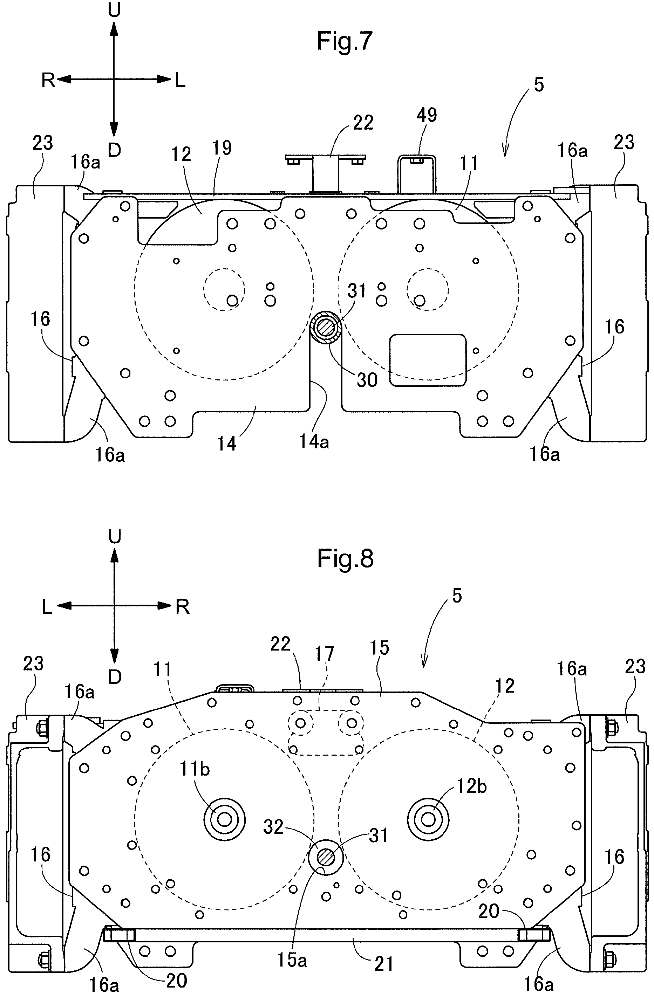

As shown in FIGS. 7, 8, and 9, in the housing frame 5, the pipe member 30 and the front-wheel transmission shaft 31 are provided in the recess 14a of the front portion 14 of the housing frame 5, and the front-wheel transmission shaft 31 is provided in the opening 15a of the rear portion 15 of the housing frame 5.

A bearing portion 32 is provided in the opening 15a of the rear portion 15 of the housing frame 5. The front-wheel transmission shaft 31 is supported by the bearing portion 32, and thus is supported on the rear portion 15 of the housing frame 5 via the bearing portion 32. The rear end portion of the pipe member 30 is attached to the bearing portion 32.

As shown in FIGS. 3, 4, 7, and 8, the pipe member 30 and the front-wheel transmission shaft 31 are provided between the right and left front frames 4 and 26 in a plan view, and above the cover 27. The pipe member 30 and the front-wheel transmission shaft 31 are provided between the output shaft 11b of the electric motor 11 and the output shaft 12b of the electric motor 12 in a plan view, and are provided at the center in the left-right direction of the housing frame 5, and directly below the frame 17 of the housing frame 5.

The pipe member 30 and the front-wheel transmission shaft 31 are provided at a height overlapping with the electric motors 11 and 12 in a side view.

Specifically, the pipe member 30 and the front-wheel transmission shaft 31 are provided between the output shafts 11b and 12b of the electric motors 11 and 12 and the lower end portions of the electric motors 11 and 12 in a side view, and are provided above the frame 21 of the housing frame 5.

### (Configuration of Driving Section)

As shown in FIGS. 1 and 2, the driving section 8 is provided with a steering wheel 33 for steering the front wheels 1, a driver's seat 34, the above-described speed change pedal 35, right and left brake pedals 36 and 37, a floor 38, and the like.

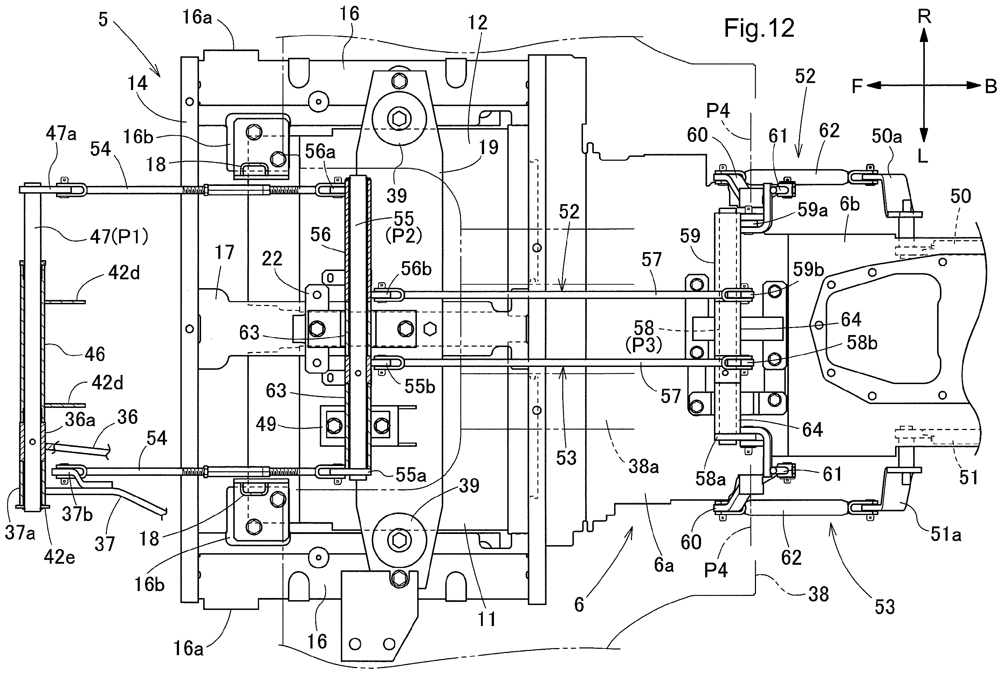

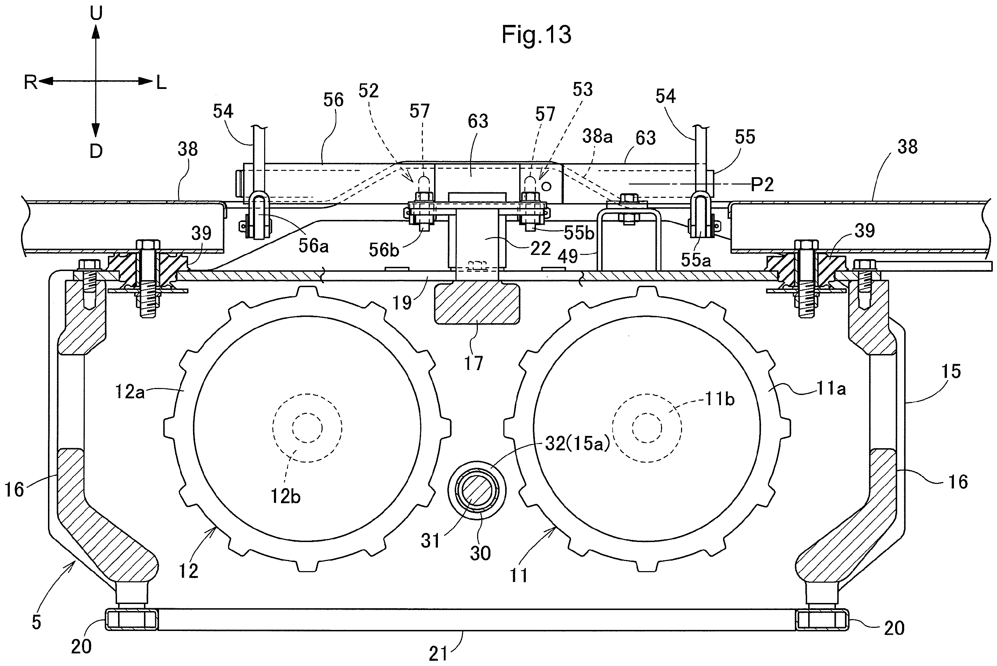

As shown in FIGS. 12 and 13, elastically deformable right and left support portions 39 made of rubber are provided on the right part and the left part of the frame 19 of the housing frame 5, and the support portions 39 are provided between the floor 38 provided below the driving section 8 and the housing frame 5 (frame 19).

As shown in FIGS. 3 and 4, elastically deformable right and left support portions 40 made of rubber are provided on the right part and the left part of the rear portion 6b of the transmission case 6, and the support portions 40 are provided between the rear portion of the driving section 8 and the rear portion 6b of the transmission case 6.

As shown in FIGS. 3, 4, 12, and 13, the floor 38 is attached to the support portions 39 and is attached to and supported by the housing frame 5 via the support portions 39, and the speed change pedal 35 is provided on the right portion of the floor 38. The rear portion of the driving section 8 is attached to the support portions 40, and is attached to and supported by the rear portion 6b of the transmission case 6 via the support portions 40.

As shown in FIGS. 1 and 2, a step 41 serving as a foothold is attached to the left portion of the floor 38, and an operator mainly boards and alights from the driving section 8 from the left side of the body 3.

The housing frame 5 and the electric motors 11 and 12 are provided below the floor 38. The battery 10 is provided frontward of the driving section 8 in such a manner that the rear end portion of the battery 10 is provided frontward of the front end portions of the electric motors 11 and 12.

### (Configuration of Support Frame of Driving Section)

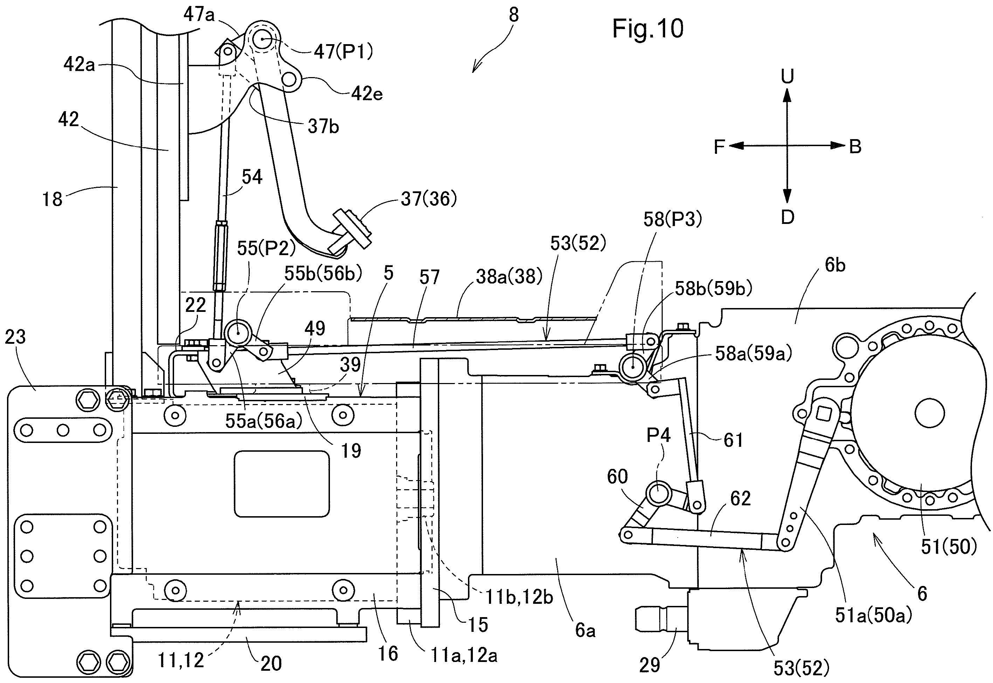

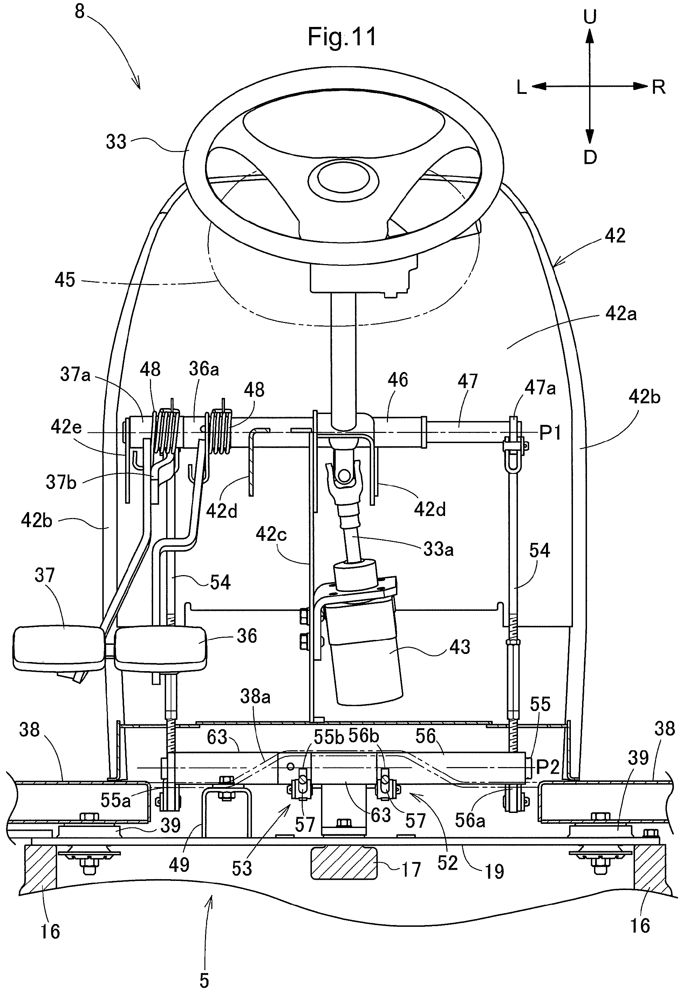

As shown in FIGS. 10 and 11, a support frame 42 is attached to the floor 38 and extends upward from the floor 38. The support frame 42 has a partition wall portion 42a, pillar portions 42b, and support plates 42c and 42d.

In the support frame 42, the partition wall portion 42a has a flat plate shape, is attached to the front portion of the floor 38, and separates the inside of the hood 13 and the battery 10 from the driving section 8. The pillar portions 42b are formed in arch shapes in a front view and are coupled to the outer peripheral portion of the partition wall portion 42a.

In the support frame 42, the support plate 42c has a vertically elongated flat plate shape and is coupled to the central part in the left-right direction of the lower part of the partition wall portion 42a. The support plate 42d has a flat plate shape, is coupled to a central part in the left-right direction of the partition wall portion 42a, and extends rearward.

### (Configuration of Steering Wheel, Power Steering Apparatus, and Display Unit in Support Frame)

As shown in FIG. 11, the base portion of the steering wheel 33 is attached to the upper portion of the support plate 42c and the support plate 42d of the support frame 42, whereby the steering wheel 33 is attached to the support frame 42.

A fully hydraulic power steering apparatus 43 is attached to the lower portion of the support plate 42c of the support frame 42, and the power steering apparatus 43 is attached to the part of the support frame 42 below the steering wheel 33. A steering shaft 33a extending downward from the base portion of the steering wheel 33 is connected to the power steering apparatus 43.

As shown in FIGS. 2, 3, and 4, a steering cylinder 44 is attached to the front axle case 7, and hydraulic fluid from the power steering apparatus 43 is supplied to the steering cylinder 44.

When the steering wheel 33 is operated, the steering shaft 33a of the steering wheel 33 operates the power steering apparatus 43, and hydraulic fluid is supplied from the power steering apparatus 43 to the steering cylinder 44, whereby the steering cylinder 44 operates and the front wheels 1 are steered.

As shown in FIGS. 2 and 11, the display unit 45 is attached to the part of the support frame 42 above the support plates 42c and 42d. The display unit 45 is constituted by a liquid crystal panel, and various types of information are displayed on the display unit 45.

### (Configuration of Pillar Frame and Hood)

As shown in FIGS. 10 and 12, a pillar frame 18 formed in an arch shape in a front view is provided, and the pillar frame 18 is provided adjacent to the support frame 42 on the front side.

As shown in FIGS. 5, 9, and 12, right and left brackets 16b are provided on the front parts of the upper parts of the right and left lateral portions 16 of the housing frame 5. The right and left lower parts of the pillar frame 18 are coupled to the right and left brackets 16b of the housing frame 5 (lateral portions 16), and the pillar frame 18 extends upward from the housing frame 5.

In this case, the support portions 39 and 40 are not provided between the lower part of the pillar frame 18 and the brackets 16b of the housing frame 5 (lateral portions 16), and the lower part of the pillar frame 18 is directly coupled to the brackets 16b of the housing frame 5 (lateral portions 16).

As shown in FIGS. 1 and 2, the hood 13 is attached on the upper portion of the pillar frame 18 in such a manner as to be able to swing about an axis extending along the left-right direction. The hood 13 can be opened and closed between a closed position (see FIG. 1) and an open position above the closed position.

### (Configuration of Brake Pedal in Support Frame)

As shown in FIGS. 10 to 13, a pipe member 46 is coupled along the left-right direction to the upper portion of the support plate 42d of the support frame 42. A pivot shaft 47 is attached to the pipe member 46 in such a manner as to be rotatable about an axis P1 extending along the left-right direction, and the left portion of the pivot shaft 47 is rotatably supported by a bracket 42e coupled to the partition wall portion 42a of the support frame 42.

A boss portion 36a is coupled to the upper portion of the right brake pedal 36, the boss portion 36a of the right brake pedal 36 is coupled to the left portion of the pivot shaft 47, and the right brake pedal 36 extends downward from the pivot shaft 47. The right brake pedal 36 and the pivot shaft 47 swing integrally about the axis P1.

A boss portion 37a is coupled to the upper portion of the left brake pedal 37, the boss portion 37a of the left brake pedal 37 is rotatably attached to the left portion of the pivot shaft 47, and the left brake pedal 37 extends downward from the pivot shaft 47. The left brake pedal 37 swings independently about the axis P1, regardless of the right brake pedal 36 and the pivot shaft 47.

The operator seated in the driver's seat 34 depresses the right and left brake pedals 36 and 37 frontward from the orientation shown in FIG. 10 with his or her left foot. A return spring 48 is attached to the boss portions 36a and 37a of the right and left brake pedals 36 and 37. In response to the operator removing his or her left foot from the right and left brake pedals 36 and 37, the right and left brake pedals 36 and 37 return to the orientation shown in FIG. 10 by the return spring 48.

### (Configuration of Coordination Mechanism Connected Between Brake Pedals and Brakes) - 1

As shown in FIGS. 10, 11, and 12, a right brake 50 capable of braking the right rear wheel 2 and a right brake 51 capable of braking the left rear wheel 2 are provided at the rear portion 6b of the transmission case 6. A right coordination mechanism 52 is connected between the right brake pedal 36 and the right brake 50 as described below. A left coordination mechanism 53 is connected between the left brake pedal 37 and the left brake 51 as described below.

The right coordination mechanism 52 includes a right coordination rod 54, a pipe member 56, a right coordination rod 57, a pipe member 59, a right crank member 60, a right coordination rod 61, and a right coordination rod 62. In this case, the pipe member 59 is a left-right part, the coordination rod 61 is an up-down part, and the coordination rod 62 is a front-rear part.

The left coordination mechanism 53 includes a left coordination rod 54, a coordination shaft 55, a left coordination rod 57, a coordination shaft 58, a left crank member 60, a left coordination rod 61, and a left coordination rod 62. In this case, the coordination shaft 58 is a left-right part, the coordination rod 61 is an up-down part, and the coordination rod 62 is a front-rear part.

A bracket 49 is coupled to the frame 19 of the housing frame 5, and two pipe members 63 are respectively coupled to the brackets 22 and 49 of the housing frame 5, with an interval therebetween in the left-right direction. The coordination shaft 55 is attached to the pipe members 63 in such a manner as to be rotatable about an axis P2 extending in the left-right direction. An arm 55a is coupled to the left end portion of the coordination shaft 55, and an arm 55b is coupled to a central portion in the left-right direction of the coordination shaft 55 (the part between the two pipe members 63).

The pipe member 56 is attached to the right portion of the coordination shaft 55 in such a manner as to be rotatable about the axis P2 independently of the coordination shaft 55. The arm 56a is coupled to the right end portion of the pipe member 56, and the arm 56b is coupled to the left end portion of the pipe member 56.

The right coordination rod 54 is coupled between the arm 47a of the pivot shaft 47 and the arm 56a of the pipe member 56. The left coordination rod 54 is coupled between the arm 37b of the left brake pedal 37 and the arm 55a of the coordination shaft 55.

### (Configuration of Coordination Mechanism Connected Between Brake Pedals and Brakes) - 2

As shown in FIGS. 10 to 13, two pipe members 64 are coupled to the upper side portions of the rear portion 6b of the transmission case 6 with an interval therebetween in the left-right direction. The coordination shaft 58 is attached to the pipe members 64 in such a manner as to be rotatable about an axis P3 extending in the left-right direction. An arm 58a is coupled to the left end portion of the coordination shaft 58, and an arm 58b is coupled to a central portion in the left-right direction of the coordination shaft 58 (the part between the two pipe members 64).

The pipe member 59 is attached to the right portion of the coordination shaft 58 in such a manner as to be rotatable about the axis P3 independently of the coordination shaft 58. An arm 59a is coupled to the right end portion of the pipe member 59, and an arm 59b is coupled to the left end portion of the pipe member 59.

The right coordination rod 57 is connected between the arm 56b of the pipe member 56 and the arm 59b of the pipe member 59. The left coordination rod 57 is connected between the arm 55b of the coordination shaft 55 and the arm 58b of the coordination shaft 58.

In the floor 38 of the driving section 8, a raised portion 38a that is curved upward relative to other parts of the floor 38 is formed at a central part in the left-right direction of the floor 38, and the raised portion 38a is provided along the front-rear direction, extending from the front end portion to the rear end portion of the floor 38.

The right and left coordination rods 57 are provided side by side in the left-right direction and in the front-rear direction between the raised portion 38a of the floor 38 and the housing frame 5. The right and left coordination rods 57 extend to a position above the rear portion 5b of the transmission case 6 (the coordination shaft 58 and the pipe member 59).

### (Configuration of Coordination Mechanism Connected Between Brake Pedals and Brakes) - 3

As shown in FIGS. 10 and 12, the right portion of the coordination shaft 58 and the pipe member 59 extend laterally outward on the right from the central portion in the left-right direction of the rear portion 6b of the transmission case 6, and extend above the right lateral side portion of the rear portion 6b of the transmission case 6. The left portion of the coordination shaft 58 extends laterally outward on the left from the central portion in the left-right direction of the rear portion 6b of the transmission case 6, and extends above the left lateral side portion of the rear portion 6b of the transmission case 6.

The right and left crank members 60 are attached to the right and left lateral side portions of the rear portion 6b of the transmission case 6 in such a manner as to be swingable about an axis P4 extending along the left-right direction. The right coordination rod 61 is connected between the arm 59a of the pipe member 59 and the right crank member 60. The left coordination rod 61 is connected between the arm 58a of the coordination shaft 58 and the left crank member 60.

The right coordination rod 61 is provided rearward of the right part of the front portion 6a of the transmission case 6, and laterally outward of the right lateral side portion of the rear portion 6b of the transmission case 6, and is provided along the up-down direction. The left coordination rod 61 is provided rearward of the left part of the front portion 6a of the transmission case 6, and laterally outward of the left lateral side portion of the rear portion 6b of the transmission case 6, and is provided along the up-down direction.

The right coordination rod 62 is connected along the front-rear direction between the right crank member 60 and an operation portion 50a of the right brake 50. The left coordination rod 62 is coupled along the front-rear direction between the left crank member 60 and an operation portion 51a of the left brake 51.

### (Operation State of Brakes via Brake Pedals)

As shown in FIGS. 10 to 13, in response to the right brake pedal 36 being depressed frontward, the pivot shaft 47 is operated in a clockwise direction in FIG. 10, the right coordination rod 54 is operated upward, and the pipe member 56 is operated in the clockwise direction in FIG. 10.

In response to the pipe member 56 being operated in the clockwise direction in FIG. 10, the right coordination rod 57 is operated frontward, the pipe member 59 is operated in a counterclockwise direction in FIG. 10, the right coordination rod 61 is operated upward, the right crank member 60 is operated in the counterclockwise direction in FIG. 10, the right coordination rod 62 is operated rearward, the operation portion 50a of the right brake 50 is operated rearward, and a braking operation is performed on the right brake 50.

In response to the left brake pedal 37 being depressed frontward, the left coordination rod 54 is operated upward, and the coordination shaft 55 is operated in the clockwise direction in FIG. 10.

In response to the coordination shaft 55 being operated in the clockwise direction in FIG. 10, the left coordination rod 57 is operated frontward, the coordination shaft 58 is operated in the counterclockwise direction in FIG. 10, the left coordination rod 61 is operated upward, the left crank member 60 is operated in the counterclockwise direction in FIG. 10, the left coordination rod 62 is operated rearward, the operation portion 51a of the left brake 51 is operated rearward, and a braking operation is performed on the left brake 51.

### (Configuration of Front Loader Apparatus)

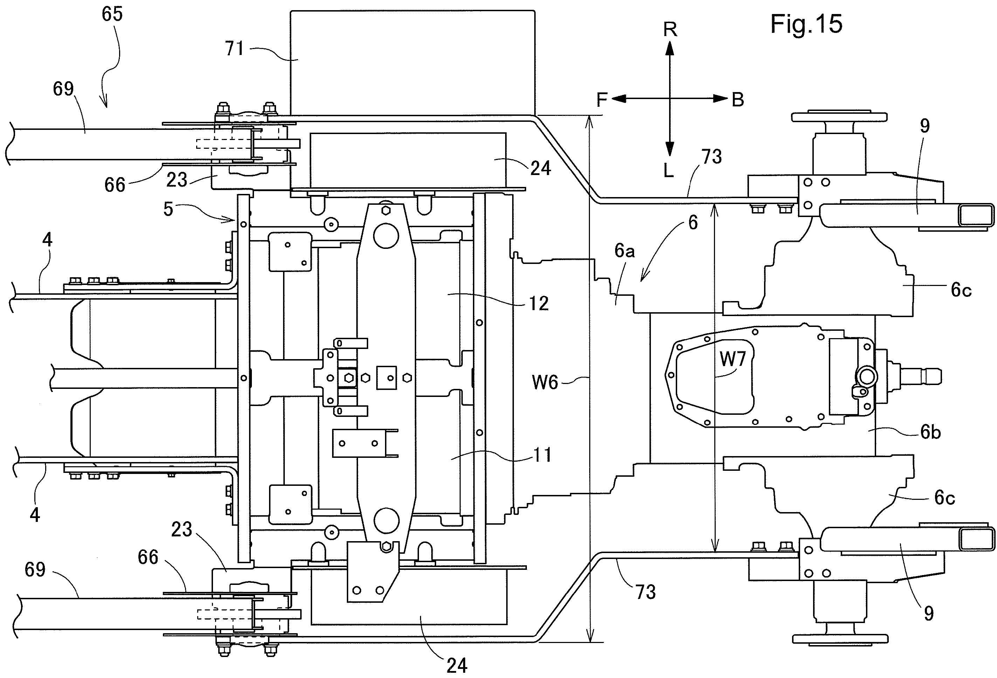

As shown in FIGS. 14 and 15, the electric tractor is equipped with the front loader apparatus 65, which is a work apparatus, in some cases.

The front loader apparatus 65 includes right and left base portions 66, right and left booms 67, a bucket 68, right and left boom cylinders 69, and right and left bucket cylinders 70.

The booms 67 are attached to upper end portions of the base portions 66 in such a manner as to be swingable up and down, and the boom cylinders 69 for swinging the booms 67 up and down are connected between the base portions 66 and the booms 67. The bucket 68 is attached to the front end portions of the right and left booms 67 in such a manner as to be swingable up and down, and the bucket cylinders 70 for swinging the bucket 68 up and down are connected between the booms 67 and the bucket 68.

### (Configuration of Backhoe Apparatus)

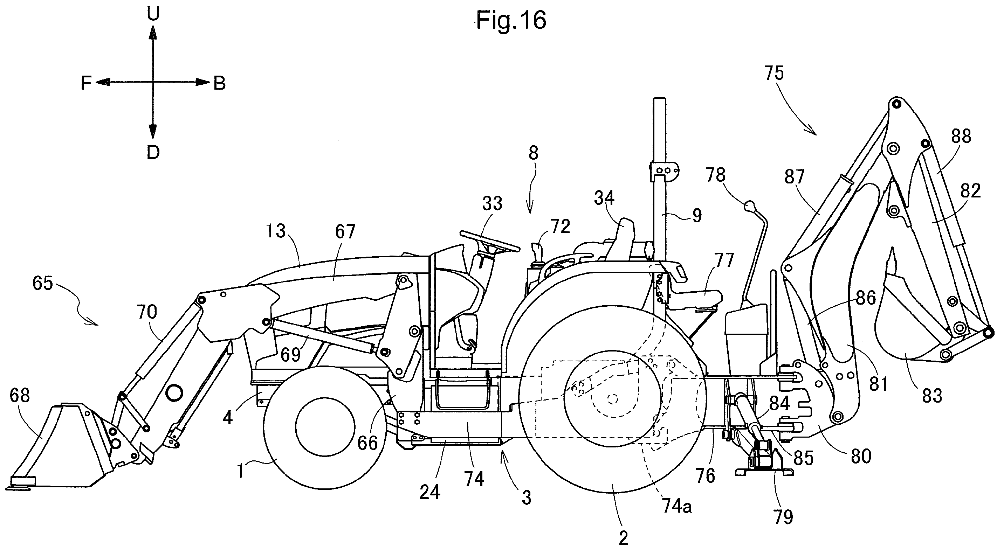

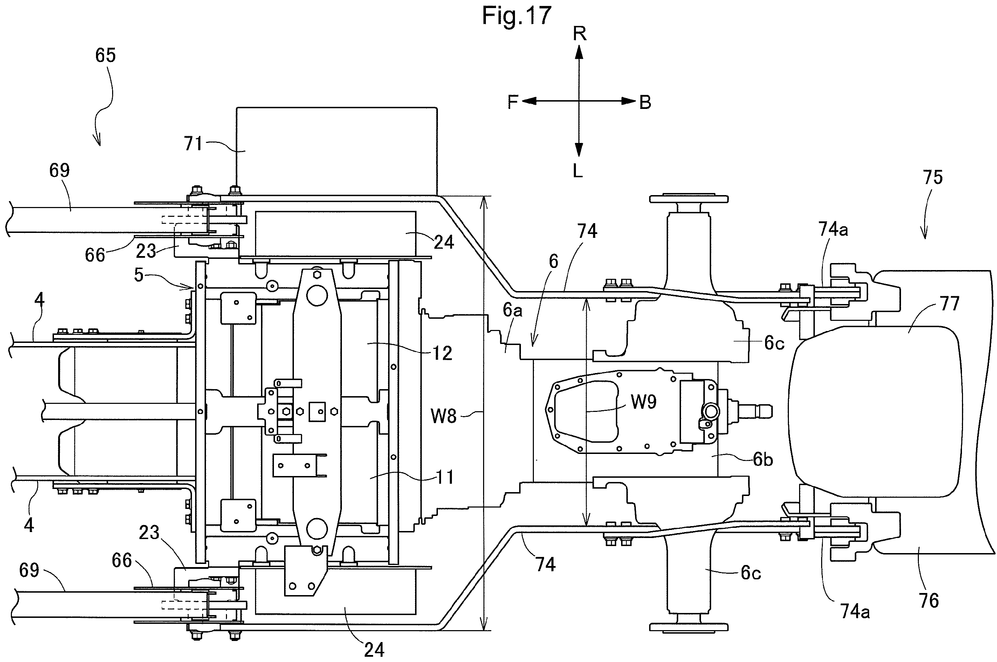

As shown in FIGS. 16 and 17, the electric tractor may be equipped with the front loader apparatus 65 and a backhoe apparatus 75, which are work apparatuses. The front loader apparatus 65 is the same as in FIGS. 14 and 15.

The backhoe apparatus 75 includes a base portion 76, a work seat 77, an operation lever 78, right and left outriggers 79, a swing bracket 80, a boom 81, an arm 82, a bucket 83, right and left outrigger cylinders 84, a swing cylinder 85, a boom cylinder 86, an arm cylinder 87, and a bucket cylinder 88.

The work seat 77 and the operation lever 78 are provided on the frame-shaped base portion 76. The right and left outriggers 79 are attached to the base portion 76 in such a manner as to be swingable up and down, and the outrigger cylinders 84 that swing the outriggers 79 up and down are connected between the base portion 76 and the outriggers 79.

The swing bracket 80 is attached to the base portion 76 in such a manner as to be swingable in the left-right direction, and the swing cylinder 85 that swings the swing bracket 80 in the left-right direction is connected between the base portion 76 and the swing bracket 80.

The boom 81 is attached to the swing bracket 80 in such a manner as to be swingable up and down, and the boom cylinder 86 that swings the boom 81 up and down is connected between the swing bracket 80 and the boom 81.

The arm 82 is attached to the boom 81 in such a manner as to be swingable back and forth, and the arm cylinder 87 for swinging the arm 82 back and forth is connected between the boom 81 and the arm 82.

The bucket 83 is attached to the arm 82 in such a manner as to be swingable back and forth, and the bucket cylinder 88 that swings the bucket 83 back and forth is connected between the arm 82 and the bucket 83.

### (Configuration When Front Loader Apparatus and Backhoe Apparatus Are Equipped on Electric Tractor)

As shown in FIGS. 14 to 17, when the front loader apparatus 65 is equipped, a lower portion of the right base portion 66 of the front loader apparatus 65 is coupled to a lateral outer surface of the right attachment portion 23 of the housing frame 5, and a lower portion of the left base portion 66 is coupled to a lateral outer surface of the left attachment portion 23 of the housing frame 5.

When only the front loader apparatus 65 is equipped, right and left front-rear frames 73 are used, as shown in FIGS. 14 and 15. When the front loader apparatus 65 and the backhoe apparatus 75 are equipped, right and left front-rear frames 74 are used, as shown in FIGS. 16 and 17.

As described above, with the base portions 66 of the front loader apparatus 65 coupled to the attachment portions 23 of the housing frame 5, as shown in FIGS. 14 to 17, front end portions of right front-rear frames 73 and 74 are coupled to the lateral outer surface of the right base portion 66 of the front loader apparatus 65, and rear end portions of the right front-rear frames 73 and 74 are coupled to the right rear axle case 6c of the transmission case 6.

The front end portions of the left front-rear frames 73 and 74 are coupled to the lateral outer surface of the left base portion 66 of the front loader apparatus 65, and the rear end portions of the left front-rear frames 73 and 74 are coupled to the left rear axle case 6c of the transmission case 6. In this case, the right and left rear axle cases 6c of the transmission case 6 are parts of the transmission case 6 to which the right and left travel apparatuses (rear wheels 2) are attached.

The base portions 66 of the front loader apparatus 65 are interposed between the attachment portions 23 and the front end portions of the front-rear frames 73 and 74, and the attachment portions 23, the front end portions of the front-rear frames 73 and 74, and the base portions 66 of the front loader apparatus 65 are fastened together and coupled.

As shown in FIGS. 16 and 17, in the right and left front-rear frames 74, right and left rear attachment portions 74a are provided on the rear portion of the front-rear frame 74. When the backhoe apparatus 75 is equipped, the base portion 76 of the backhoe apparatus 75 is attached to the rear attachment portion 74a of the front-rear frames 74.

### (Configuration of Operation of Front Loader Apparatus and Backhoe Apparatus)

As shown in FIGS. 14 to 17, a control valve unit 71 provided with a plurality of electromagnetically operated control valves is attached to the front portions of the right front-rear frames 73 and 74. An operation lever 72 for operating the control valve unit 71 is provided at the right portion of the driving section 8. In this case, the control valve unit 71 is a control valve.

The electric motor 12 drives a hydraulic pump (not shown), and hydraulic fluid of the hydraulic pump is supplied to the control valve unit 71, and is supplied to and discharged from the boom cylinder 69 and the bucket cylinder 70 of the front loader apparatus 65 from the control valve unit 71. The hydraulic fluid of the hydraulic pump is supplied also to a hydraulic device (not shown), such as the power steering apparatus 43 (see FIG. 11) equipped on the electric tractor, and the hydraulic device such as the power steering apparatus 43 operates with use of the supplied hydraulic fluid.

The operator in the driver's seat 34 can operate the control valve of the control valve unit 71 by operating the operation lever 72, thereby operating the boom 67 and the bucket 68 of the front loader apparatus 65.

When operating the backhoe apparatus 75, the operator switches to a state in which the hydraulic fluid of the above-described hydraulic pump is supplied to the backhoe apparatus 75.

The operator sits in the work seat 77 of the backhoe apparatus 75 and lowers the right and left outriggers 79 to the ground. The operator in the work seat 77 can operate the swing bracket 80, the boom 81, the arm 82, and the bucket 83 of the backhoe apparatus 75 by operating the operation lever 78 to operate the control valve (not shown) of the backhoe apparatus 75.

### (Configuration of Front-Rear Frames)

As shown in FIGS. 14 to 17, the front-rear frames 73 and 74 are formed in crank shapes in a plan view. Widths (intervals) W6 and W8 in the left-right direction of the front portions of the right and left front-rear frames 73 and 74 are greater than widths (intervals) W7 and W9 in the left-right direction of the rear portions of the right and left front-rear frames 73 and 74. The widths (intervals) W7 and W9 in the left-right direction of the rear portions of the right and left front-rear frames 73 and 74 are approximately the same as the width W1 in the left-right direction of the housing frame 5 (see FIG. 4).

The right front-rear frames 73 and 74 are provided along the front-rear direction laterally outward on the right of the right inverter 24 and laterally outward on the right of the transmission case 6, and the control valve unit 71 is attached to the front portions of the right front-rear frames 73 and 74. The left front-rear frames 73 and 74 are provided along the front-rear direction laterally outward on the left of the left inverter 24 and laterally outward on the left of the transmission case 6. The right and left front-rear frames 73 and 74 are provided at a height that overlaps with the inverter 24, the housing frame 5, and the transmission case 6 in a side view.

The widths (intervals) W7 and W9 in the left-right direction of the rear portions of the right and left front-rear frames 73 and 74 are smaller than the widths (intervals) W6 and W8 in the left-right direction of the front portions of the right and left front-rear frames 73 and 74. For this reason, the rear portions of the right and left front-rear frames 73 and 74 do not interfere with the rear wheels 2.

### (First Alternative Embodiment of Invention)

The housing frame 5 may be eliminated.

According to this configuration, it is preferable that the electric motors 11 and 12 are attached to the lower portion of the floor 38. It is preferable that the front frame 4 extends rearward, passing below the floor 38, and is coupled to the transmission case 6, and the electric motors 11 and 12 attached on the part of the front frame 4 that is below the floor 38.

The base portion 66 of the front loader apparatus 65 is preferably configured to be coupled to the front frame 4.

### (Second Alternative Embodiment of the Invention)

Since the electric motor 12 may require a larger output than the electric motor 11 that generates motive power for traveling, the electric motor 12 may be configured to have a larger output than the electric motor 11.

### (Third Alternative Embodiment of Invention)

The PTO shaft 28 and the mid-PTO shaft 29 may be eliminated.

According to this configuration, only a work apparatus that operates with use of hydraulic fluid can be equipped on the electric tractor.

### (Fourth Alternative Embodiment of Invention)

The electric motor 12 may be configured to transmit motive power to the PTO shaft 28 and the mid-PTO shaft 29, but not to drive the hydraulic pump.

According to this configuration, the hydraulic pump may be configured to be driven by an electric motor (not shown) other than the electric motors 11 and 12.

The hydraulic pump may be configured to be driven by the electric motor 11. In this case, the control valve unit 71 is preferably attached to the left front-rear frames 73 and 74.

### (Fifth Alternative Embodiment of Invention)

When the electric motors 11 and 12 are provided side by side along the left-right direction, the electric motor 11 may be provided on the right and the electric motor 12 may be provided on the left.

When the housing frame 5 is provided or when the housing frame 5 is eliminated, the battery 10, the electric motors 11 and 12, and the housing frame 5 may be arranged in such a manner that the rear end portion of the battery 10 is located slightly rearward of the front end portions of the electric motors 11 and 12.

### (Sixth Alternative Embodiment of Invention)

In the housing frame 5, the bearing portion 32 may be provided in the front portion 14 of the housing frame 5, and the front-wheel transmission shaft 31 may be supported by the bearing portion 32 and supported by the front portion 14 of the housing frame 5 via the bearing portion 32.

### (Seventh Alternative Embodiment of Invention)

In the housing frame 5, the bearing portions 32 may be provided in the front portion 14 and the rear portion 15 of the housing frame 5, and the front-wheel transmission shaft 31 may be supported by the bearing portions 32 and supported by the front portion 14 and the rear portion 15 of the housing frame 5 via the bearing portions 32.

### (Eighth Alternative Embodiment of Invention)

Two electric motors 11 may be housed in the housing frame 5 side by side along the left-right direction.

According to this configuration, one electric motor 11 is a first electric motor 11, and the other electric motor 11 is a second electric motor 11. In this case, the electric motor 12 may be attached to a part other than the housing frame 5.

### (Ninth Alternative Embodiment of Invention)

Two electric motors 12 may be housed in the housing frame 5 side by side along the left-right direction.

According to this configuration, one electric motor 12 is a first electric motor 12, and the other electric motor 12 is a second electric motor 12. In this case, the electric motor 11 may be attached to a part other than the housing frame 5.

### (Tenth Alternative Embodiment of the Invention)

The front portions of the electric motors 11 and 12 may be coupled to the front portion 14 of the housing frame 5.

According to this configuration, the casings of the electric motors 11 and 12 are part of the housing frame 5, thus improving the rigidity of the housing frame 5.

### (Eleventh Alternative Embodiment of the Invention)

If the front loader apparatus 65 and the backhoe apparatus 75 are not equipped, the front-rear frames 73 and 74 may be coupled between the attachment portion 23 of the housing frame 5 and the rear axle case 6c of the transmission case 6.

If the front loader apparatus 65 is not equipped and the front-rear frames 74 are coupled between the attachment portion 23 of the housing frame 5 and the rear axle case 6c of the transmission case 6, the backhoe apparatus 75 may be attached to the rear attachment portions 74a of the front-rear frames 74.

### (Twelfth Alternative Embodiment of the Invention)

Instead of the rear wheels 2, crawler-type right and left travel apparatuses (not shown) may be attached to the transmission case 6.

The electric tractor may be configured as a hybrid-type electric tractor including an engine (not shown) and the electric motors 11 and 12 as power sources, instead of as an electric tractor including only the electric motors 11 and 12 as power sources.

### (Correspondence with Claims) - 1

With the above configuration, the first electric motor 11 having the output shaft 11b facing rearward and the second electric motor 12 having the output shaft 12b facing rearward are included.

The front wheels 1 for traveling are included, which are provided frontward of the first electric motor 11 and the second electric motor 12. The transmission case 6 is included, which is provided rearward of the first electric motor 11 and the second electric motor 12, and to which the rear travel apparatus (rear wheels 2) is attached.

The transmission mechanism is included, which is provided inside the transmission case 6 and transmits the transmitted motive power to the travel apparatus (rear wheels 2).

The front-wheel transmission shaft 31 is included, which transmits the motive power branched from the transmission mechanism to the front wheels 1.

The first electric motor 11 and the second electric motor 12 are provided side by side along the left-right direction.

The front-wheel transmission shaft 31 extends frontward from the transmission case 6, passing between the output shaft 11b of the first electric motor 11 and the output shaft 12b of the second electric motor 12 in a plan view.

### (Correspondence with Claims) - 2

With the above configuration, the first electric motor 11 generates motive power for traveling. The second electric motor 12 generates motive power and hydraulic pressure for operating the equipped work apparatuses (the front loader apparatus 65 and the backhoe apparatus 75).

The front-wheel transmission shaft 31 is provided at a height overlapping with the first electric motor 11 and the second electric motor 12 in a side view.

The housing frame 5 is included, which houses the first electric motor 11 and the second electric motor 12. The front-wheel transmission shaft 31 is provided in such a manner as to pass through the front portion 14 and the rear portion 15 of the housing frame 5, and at least either the front portion 14 or the rear portion 15 of the housing frame 5 is provided with the bearing portion 32 that supports the front-wheel transmission shaft 31.

The upper frame (frame 17) is included, which is provided above the front-wheel transmission shaft 31 and coupled along the front-to-rear direction between the front portion 14 and the rear portion 15 of the housing frame 5.

The lower frame (frame 21) is included, which is provided below the front-wheel transmission shaft 31 and coupled along the left-right direction between the right portion (right lateral portion 16) and the left portion (left lateral portion 16) of the housing frame 5.

### [Second Embodiment]

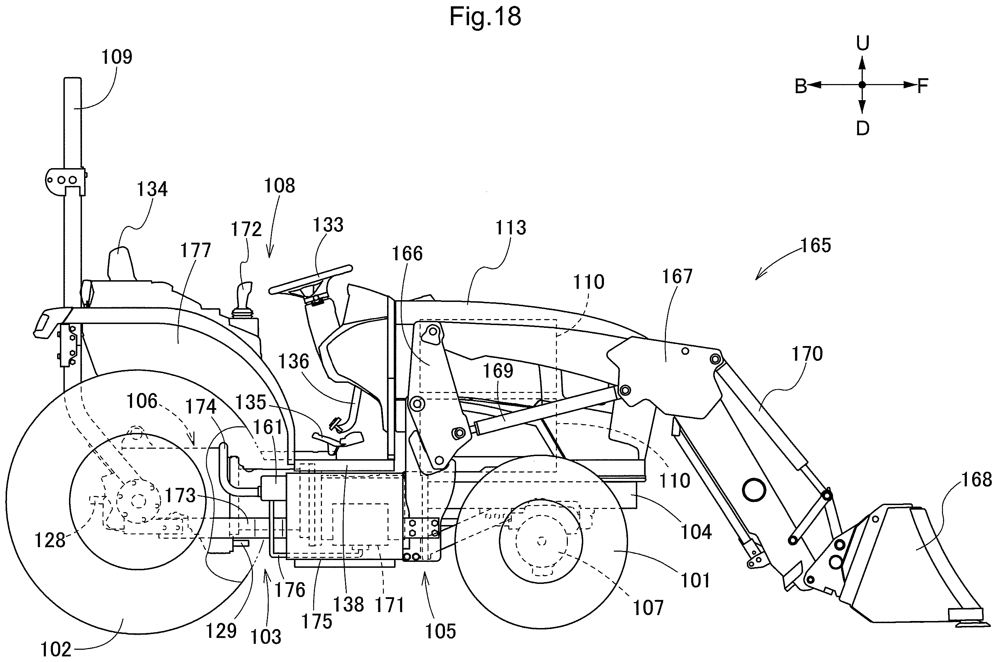

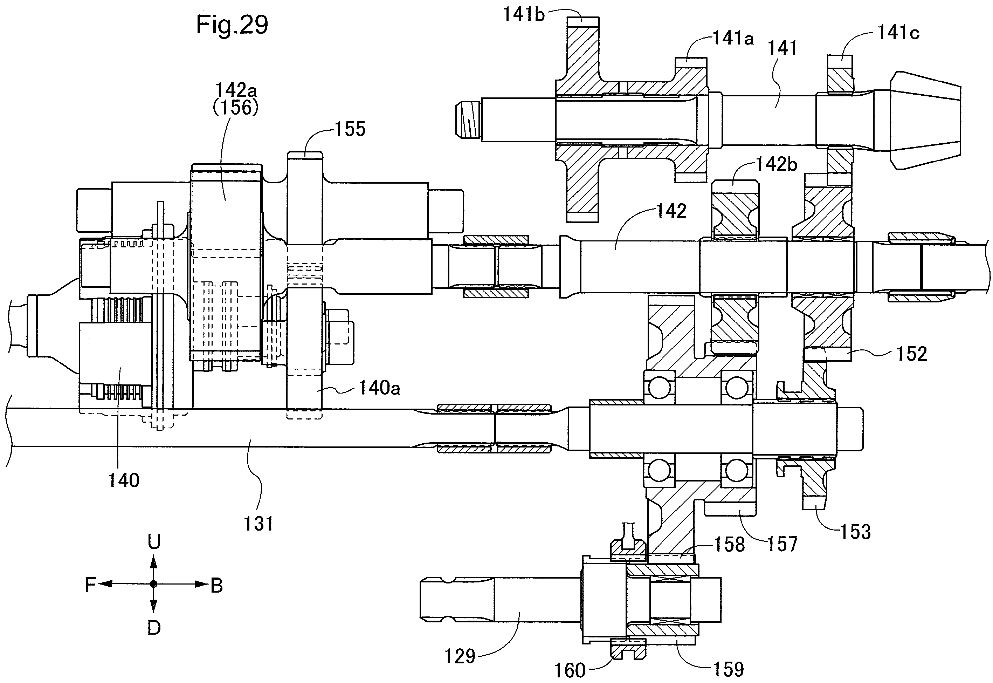

FIGS. 18 to 29 show an electric tractor according to a second embodiment of the present invention, and in FIGS. 18 to 29, where F indicates frontward, B indicates rearward, U indicates upward, D indicates downward, R indicates rightward, and L indicates leftward.

### (Overall Configuration of Electric Tractor)

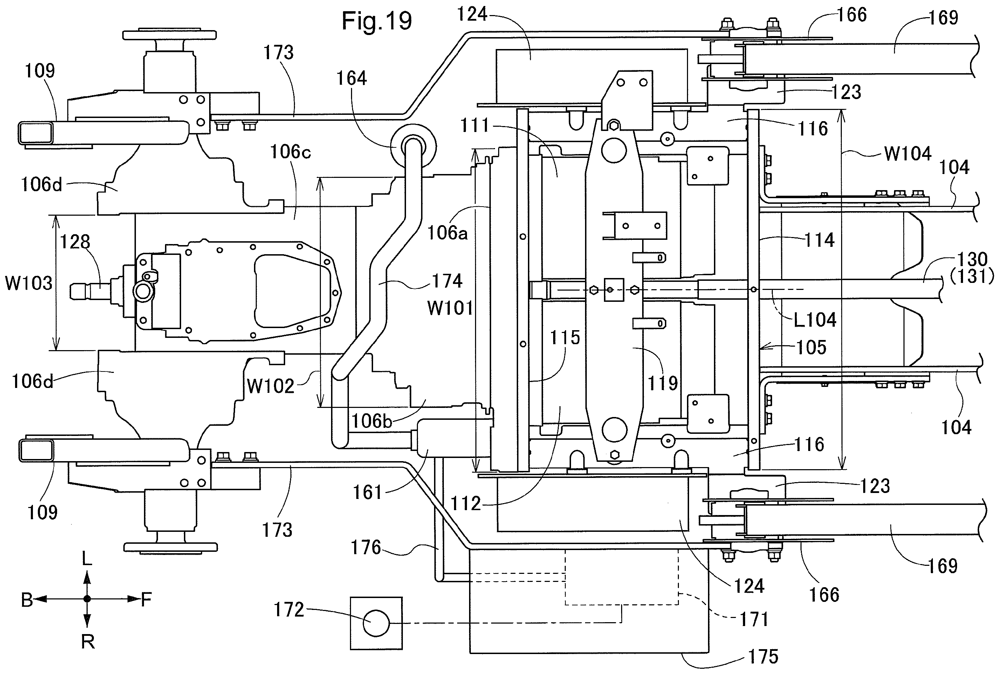

As shown in FIGS. 18 and 19, right and left front wheels 101 are provided at a front portion of a body 103, and right and left rear wheels 102 are provided at a rear portion of the body 103, with the body 103 being supported by the front wheels 101 and the rear wheels 102. In this case, the rear wheels 102 are a rear travel apparatus.

The body 103 has front frames 104, a housing frame 105, and a transmission case 106. The front frames 104 are coupled to a front portion 114 of the housing frame 105, and the transmission case 106 is coupled to a rear portion 115 of the housing frame 105, thereby forming the body 103. A first electric motor 111 and a second electric motor 112, which serve as motive power sources, are housed in the housing frame 105.

A front axle case 107 is attached to the front frame 104, and the right and left front wheels 101 are attached to the front axle case 107. The right and left rear wheels 102 are attached to the transmission case 106.

A driving section 108 to be occupied by an operator is provided across the housing frame 105 and the transmission case 106. A ROPS frame 109 is attached to the transmission case 106 and extends upward, and is provided rearward of the driving section 108. A battery 110 that supplies power to the electric motors 111 and 112 is attached to the front frames 104, and a hood 113 that covers the battery 110 is provided.

### (Configuration of Driving Section)

As shown in FIG. 18, the driving section 108 is provided with a steering wheel 133, a driver's seat 134, a speed change pedal 135, right and left brake pedals 136, and a floor 138.

The floor 138 is provided below the driving section 108, the floor 138 is supported by the housing frame 105, and the rear portion of the driving section 108 is supported by the transmission case 106.

The steering wheel 133 for steering the front wheels 101 is provided at the front portion of the driving section 108, and the driver's seat 134 is provided at the rear portion of the driving section 108. The speed change pedal 135 is provided at the right portion of the floor 138, and the right and left brake pedals 136 are provided leftward of the steering wheel 133.

### (Configuration of Housing Frame)

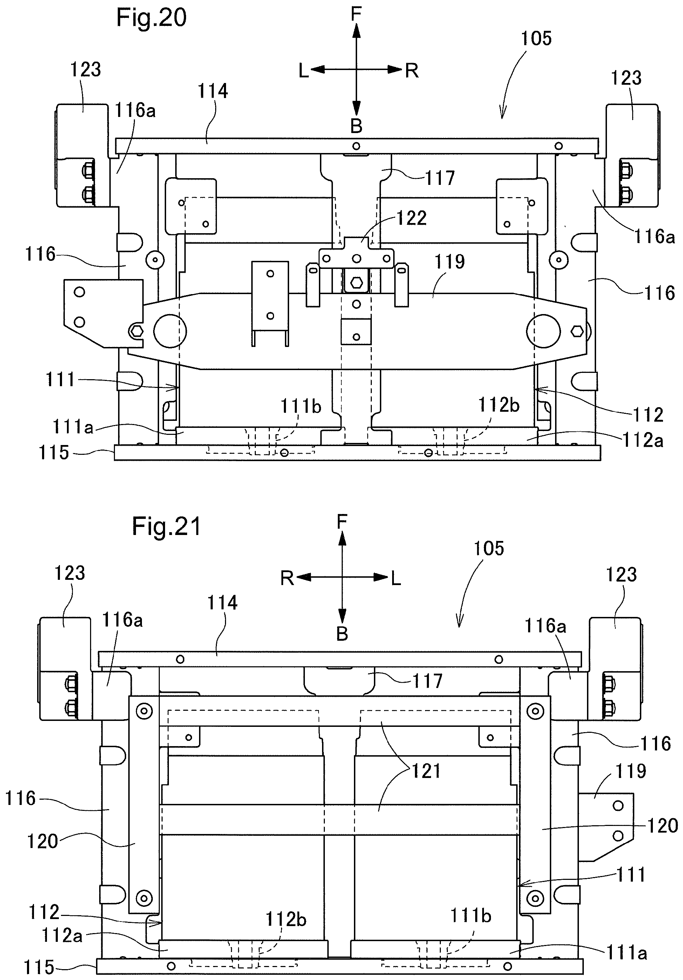

As shown in FIGS. 20 to 24, the housing frame 105 has a front portion 114, a rear portion 115, a right lateral portion 116, a left lateral portion 116, frames 117, 119, 120, and 121, and the like. In this case, the rear portion 115 of the housing frame 105 is a coupling portion. The right lateral portion 116 of the housing frame 105 is a right portion of the housing frame 105, and the left lateral portion 116 of the housing frame 105 is a left portion of the housing frame 105.

The front portion 114 and the rear portion 115 are configured as flat plates extending along the up-down direction and the left-right direction. The right and left lateral portions 116 are flat plates extending along the up-down direction and the front-rear direction and are slightly curved. The front parts of the lateral portions 116 are coupled to the right part and the left part of the rear surface of the front portion 114, and the rear parts of the lateral portions 116 are coupled to the right and left portions of the front surface of the rear portion 115.

The frame 117 is coupled along the front-rear direction between the central part in the left-right direction of the upper part of the rear surface of the front portion 114 and the central portion in the left-right direction of the upper part of the front surface of the rear portion 115. The frame 119 is coupled along the left-right direction between the upper parts of the right and left lateral portions 116. A bracket 122 is coupled between the frame 117 and the frame 119.

The right and left frames 120 are coupled along the front-rear direction to the lower parts of the right and left lateral portions 116. The frame 121 is coupled along the left-right direction between the right and left frames 120.

### (Configuration for Housing Electric Motors in Housing Frame)

As shown in FIGS. 20 to 24, the electric motors 111 and 112 are provided side by side along the left-right direction inside the housing frame 105 (between the front portion 114 and the rear portion 115, between the right and left lateral portions 116, and between the frames 117 and 119 and the frame 121). The electric motors 111 and 112 are identical and have the same output.

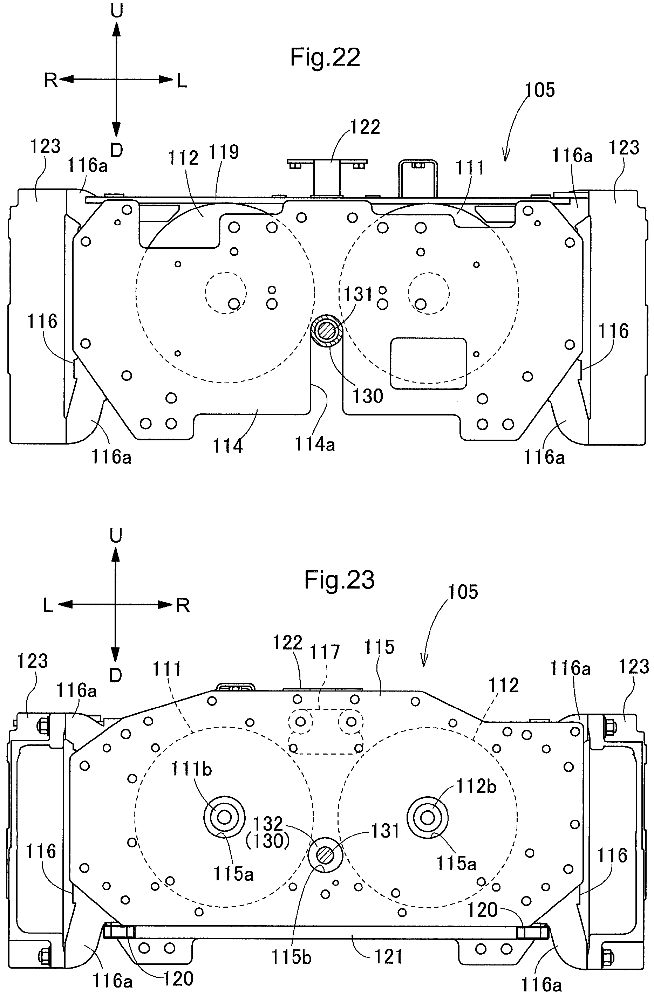

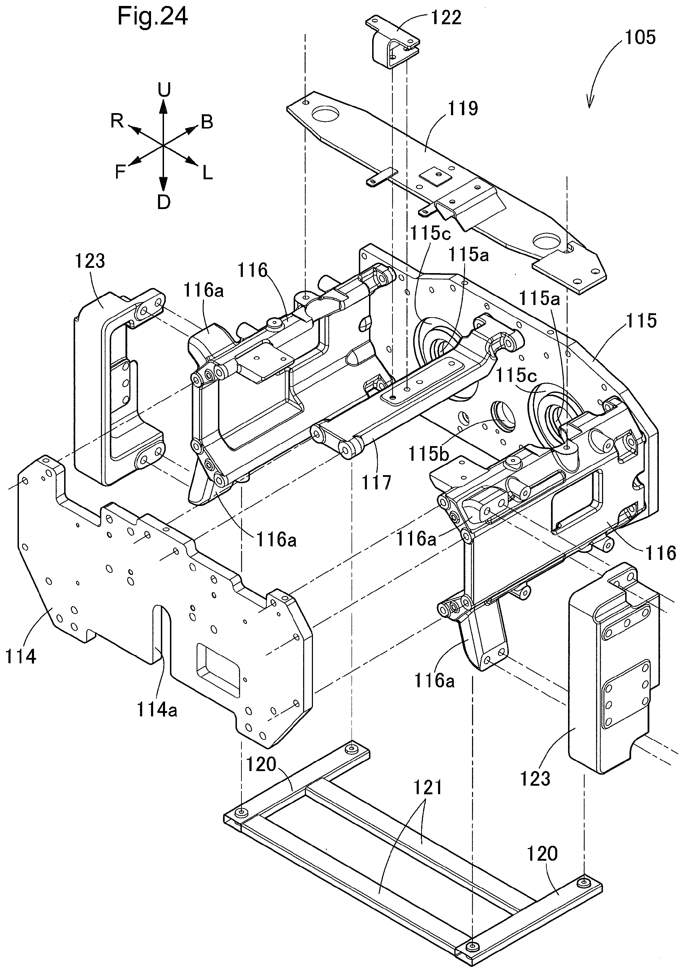

As shown in FIGS. 23 and 24, right and left openings 115a are provided in the right part and the left part of the rear portion 115 of the housing frame 105, and an opening 115b is provided in the central part in the left-right direction of the rear portion 115 of the housing frame 105. Ring-shaped recesses 115c are formed on the front surface of the rear portion 115 of the housing frame 105, concentrically with the openings 115a in the rear portion 115 of the housing frame 105. In this case, the opening 115b is a front-wheel transmission opening.

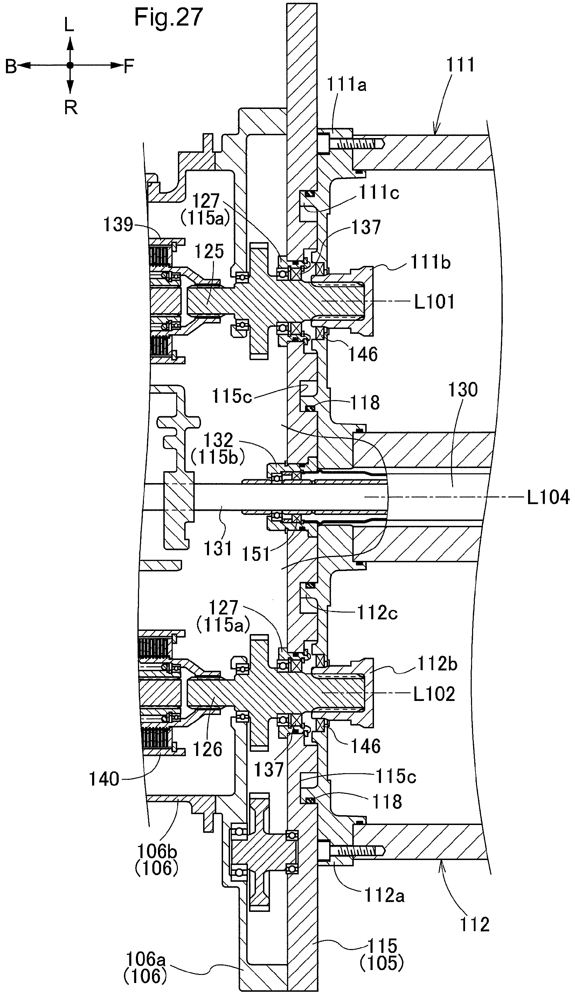

As shown in FIG. 27, flange portions 111a and 112a and output shafts 111b and 112b are provided at the rear end portions of the electric motors 111 and 112. Ring-shaped protrusions 111c and 112c are formed on the flange portions 111a and 112a of the electric motors 111 and 112, concentrically with the output shafts 111b and 112b of the electric motors 111 and 112. In this case, the flange portions 111a and 112a of the electric motors 111 and 112 are the rear portions of the electric motors 111 and 112.

The protrusions 111c and 112c of the electric motors 111 and 112 are inserted into the recesses 115c in the rear portion 115 of the housing frame 105 (spigot structure). Sealing members 118 such as O-rings are provided between the protrusions 111c and 112c of the electric motors 111 and 112 and the recesses 115c in the rear portion 115 of the housing frame 105.

In the above-described state, the flange portion 111a of the electric motor 111 is coupled to the left part of the front surface of the rear portion 115 of the housing frame 105, and the flange portion 112a of the electric motor 112 is coupled to the right part of the front surface of the rear portion 115 of the housing frame 105.

As shown in FIGS. 23 and 27, the output shafts 111b and 112b of the electric motors 111 and 112 are provided at positions opposing the openings 115a of the rear portion 115 of the housing frame 105 and face rearward.

As shown in FIGS. 19 and 27, in the housing frame 105, if a virtual line L104 passing between the electric motor 111 and the electric motor 112 along the front-rear direction is envisioned, the electric motor 111 is provided leftward of the virtual line L104 in a plan view, and the electric motor 112 is provided rightward of the virtual line L104 in a plan view.

### (Configuration of Attachment Portions for Attaching Work Apparatus, and Inverter)

As shown in FIGS. 20 to 24, on the right and left lateral portions 116 of the housing frame 105, upper attachment portions 116a are inclined upward on the upper parts of the front parts of the lateral portions 116, and lower attachment portions 116a are inclined downward on the lower parts of the front parts of the lateral portions 116.

A right attachment portion 123 is coupled across the attachment portions 116a of the right lateral portion 116 of the housing frame 105, and a left attachment portion 123 is coupled across the attachment portions 116a of the left lateral portion 116 of the housing frame 105. As will be described later, a work apparatus such as a front loader apparatus 165 (see FIG. 18) is attached to the right and left attachment portions 123.

As shown in FIG. 19, right and left inverters 124 are attached to the right and left lateral portions 116 of the housing frame 105, and are provided rearward of the attachment portions 123.

Power of the battery 110 is supplied to the left inverter 124, and based on an operation of the speed change pedal 135 (see FIG. 18), the left inverter 124 converts the DC power of the battery 110 into AC power and supplies the result to the electric motor 111, whereby the electric motor 111 operates in both forward and reverse directions.

Power of the battery 110 is supplied to the right inverter 124, and the right inverter 124 converts the DC power of the battery 110 into AC power and supplies the result to the electric motor 112, whereby the electric motor 112 operates. As described later, the electric motor 112 drives a hydraulic pump 161, and therefore the electric motor 112 operates in the forward direction and does not operate in the reverse direction.

### (Overall Configuration of Transmission Case)

As shown in FIG. 19, the transmission case 106 includes a first part 106a, a second part 106b, a third part 106c, right and left rear axle cases 106d, and the like. The rear axle cases 106d are provided in the third part 106c, and the right and left rear wheels 102 are attached to the rear axle cases 106d. In this case, the first part 106a and the second part 106b of the transmission case 106 are a front portion of the transmission case 106, and the third part 106c of the transmission case 106 is a rear portion of the transmission case 106.

The first part 106a of the transmission case 106 is coupled to the rear surface of the rear portion 115 of the housing frame 105, and the transmission case 106 is provided rearward of the electric motors 111 and 112.

The first part 106a of the transmission case 106 is open frontward, and the first part 106a of the transmission case 106 is coupled to the rear surface of the rear portion 115 of the housing frame 105, whereby the first part 106a of the transmission case 106 is closed by the rear portion 115 of the housing frame 105.

A width W104 in the left-right direction of the housing frame 105 is greater than widths W101, W102, and W103 in the left-right direction of the transmission case 106.

The width W101 in the left-right direction of the first part 106a of the transmission case 106 is greater than the width W102 in the left-right direction of the second part 106b of the transmission case 106. The width W102 in the left-right direction of the second part 106b of the transmission case 106 is greater than the width W103 in the left-right direction of the third part 106c of the transmission case 106.

### (Overview of Internal Configuration of Transmission Case)

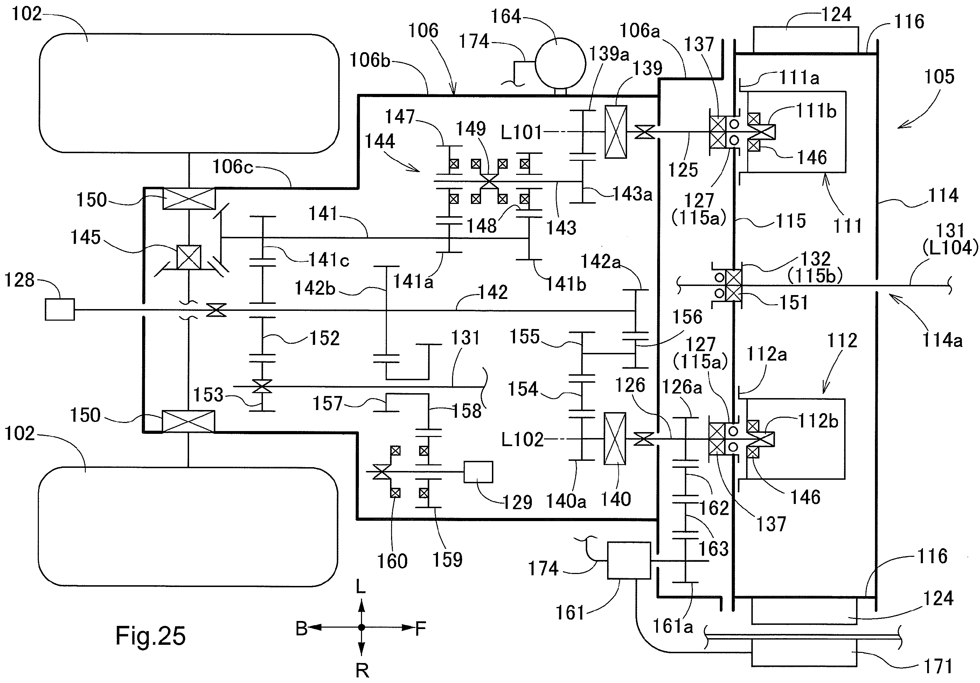

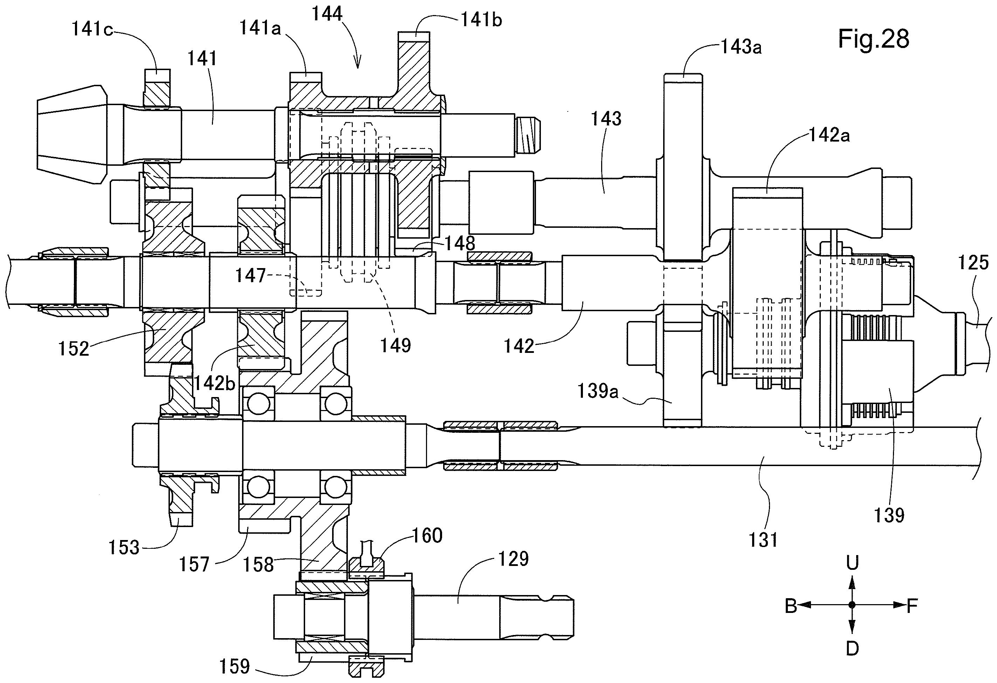

As shown in FIGS. 25 and 28, lubricating oil is stored inside the transmission case 106. A hydraulic multi-plate travel clutch 139 and a hydraulic multi-plate PTO clutch 140 are provided at the right part and the left part of the second part 106b of the transmission case 106.

A travel transmission shaft 141, a PTO transmission shaft 142, and a front-wheel transmission shaft 131 are provided along the front-rear direction at a central portion in the left-right direction of the transmission case 106, spanning across the second part 106b and the third part 106c of the transmission case 106.

The travel relay shaft 143 is provided along the front-rear direction at the left portion of the second part 106b of the transmission case 106. A gear-shift type transmission 144 is provided at the left portion of the second part 106b of the transmission case 106. A rear-wheel differential apparatus 145 is provided in the third part 106c of the transmission case 106.

The PTO shaft 128 (see FIGS. 18 and 19) is provided facing rearward at the rear end portion of the third part 106c of the transmission case 106. The mid-PTO shaft 129 (see FIG. 18) is provided facing frontward at the bottom portion of the third part 106c of the transmission case 106.

As described later, the motive power of the electric motor 111 is transmitted to the travel clutch 139, and is transmitted from the travel clutch 139 to the rear wheels 102 via the travel relay shaft 143, the transmission 144, the travel transmission shaft 141, and the rear-wheel differential apparatus 145. Motive power branched from between the transmission 144 and the rear-wheel differential apparatus 145 is transmitted to the front-wheel transmission shaft 131, and then transmitted from the front-wheel transmission shaft 131 to the front wheels 101.

The motive power of the electric motor 112 is transmitted to the PTO clutch 140, and is transmitted from the PTO clutch 140 to the PTO shaft 128 via the PTO transmission shaft 142. Motive power branched from the PTO transmission shaft 142 is transmitted to the mid-PTO shaft 129.

### (Configuration for Coupling Electric Motor, Travel Clutch, and PTO Clutch)

As shown in FIGS. 25, 26, and 27, an input shaft 125 is coupled to the travel clutch 139, an input shaft 126 is coupled to the PTO clutch 140, and the input shafts 125 and 126 extend frontward from the first part 106a of the transmission case 106.

The input shaft 125 passes through the left opening 115a of the rear portion 115 of the housing frame 105 and is coupled to the output shaft 111b of the electric motor 111 by a spline structure. The input shaft 126 passes through the right opening 115a of the rear portion 115 of the housing frame 105 and is coupled to the output shaft 112b of the electric motor 112 by a spline structure.

As a result, the motive power of the output shaft 111b of the electric motor 111 is transmitted to the travel clutch 139 via the input shaft 125. The motive power of the output shaft 112b of the electric motor 112 is transmitted to the PTO clutch 140 via the input shaft 126.

Bearing portions 127 having bearings are provided in the right and left openings 115a of the rear portion 115 of the housing frame 105. The input shafts 125 and 126 pass through the bearing portions 127, are supported by the bearing portions 127, and are supported by the rear portion 115 of the housing frame 105 via the bearing portions 127.

Sealing members 137 are provided in the bearing portions 127, and sealing members 146 are provided on the output shafts 111b and 112b of the electric motors 111 and 112.

As a result, even if the lubricating oil of the transmission case 106 tries to enter the spaces between the recesses 115c in the rear portion 115 of the housing frame 105 and the protrusions 111c and 112c of the electric motors 111 and 112 through the openings 115a and the bearing portions 127 of the rear portion 115 of the housing frame 105, it is prevented by the sealing member 137.

Even if the lubricating oil of the transmission case 106 enters the above-described space, the sealing members 118 prevent the lubricating oil from leaving the above-described space, and the sealing members 146 prevent it from entering the interiors of the electric motors 111 and 112.

### (Configuration of Transmission System for Transmission to Rear Wheels in Transmission Case) - 1

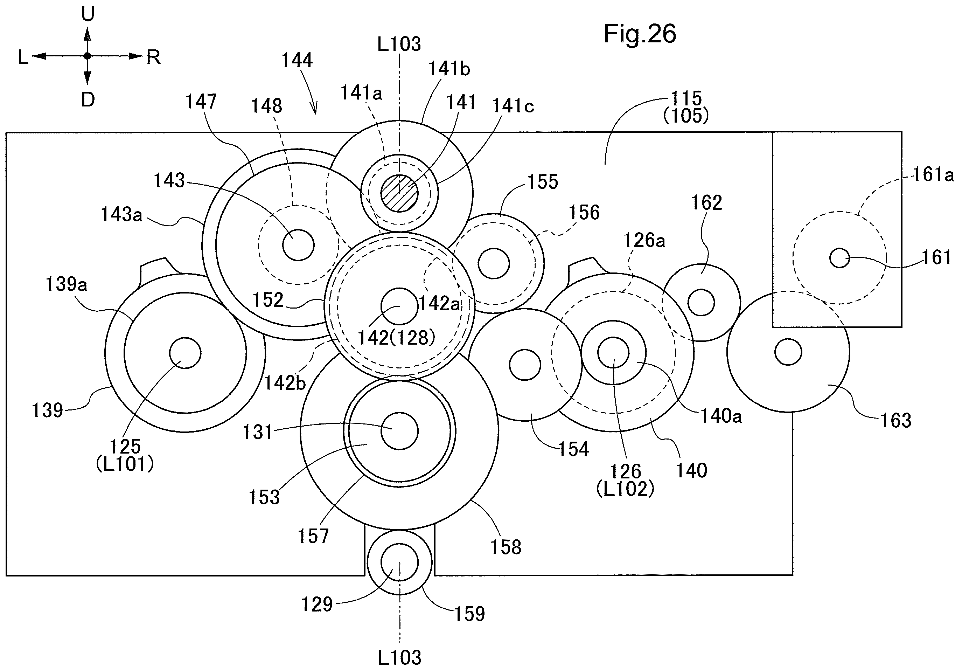

As shown in FIGS. 25 and 26, the travel transmission shaft 141, the PTO transmission shaft 142, the front-wheel transmission shaft 131, and the mid-PTO shaft 129 are provided side by side in the up-down direction along a virtual line L103 provided along the vertical direction at a central portion in the left-right direction of the transmission case 106.

Among the travel transmission shaft 141, the PTO transmission shaft 142, the front-wheel transmission shaft 131, and the mid-PTO shaft 129, the travel transmission shaft 141 is provided at the highest position. The PTO transmission shaft 142 is provided below the travel transmission shaft 141, the front-wheel transmission shaft 131 is provided below the PTO transmission shaft 142, and the mid-PTO shaft 129 is provided below the front-wheel transmission shaft 131.

A virtual line L101 extending rearward from the output shaft 111b (input shaft 125) of the electric motor 111 is envisioned, and a virtual line L102 extending rearward from the output shaft 112b (input shaft 126) of the electric motor 112 is envisioned. The travel transmission shaft 141, the PTO transmission shaft 142, the front-wheel transmission shaft 131, and the mid-PTO shaft 129 are provided between the virtual line L101 and the virtual line L102 in a plan view (rear view). In this case, the virtual line L101 is a first virtual line, and the virtual line L102 is a second virtual line.

The travel relay shaft 143 is provided at a height between the travel transmission shaft 141 and the PTO transmission shaft 142, is provided between the virtual line L101 and the virtual line L102 in a plan view (rear view), and is provided between the virtual line L101 and the travel transmission shaft 141 in a plan view (rear view).

### (Configuration of Transmission System for Transmission to Rear Wheels in Transmission Case) - 2

As shown in FIGS. 25, 26, and 28, a transmission gear 139a of the travel clutch 139 and a transmission gear 143a coupled to the travel relay shaft 143 engage with each other. The motive power of the travel clutch 139 is transmitted to the center in the left-right direction of the transmission case 106 by the transmission gear 139a of the travel clutch 139 and the transmission gear 143a of the travel relay shaft 143, and is transmitted to the travel relay shaft 143. In this case, the transmission gear 139a of the travel clutch 139 and the transmission gear 143a of the travel relay shaft 143 are a first transmission mechanism.

The transmission 144 is provided across the travel relay shaft 143 and the travel transmission shaft 141. In the transmission 144, a high-speed gear 147 rotatably attached to the travel relay shaft 143 engages with a transmission gear 141a coupled to the travel transmission shaft 141, and a low-speed gear 148 rotatably attached to the travel relay shaft 143 engages with a transmission gear 141b coupled to the travel transmission shaft 141. A shift member 149 is attached to the travel relay shaft 143 by a spline structure in such a manner as to be able to rotate and slide integrally.

In the transmission 144, when the shift member 149 is engaged with the high-speed gear 147, the motive power of the travel relay shaft 143 is transmitted to the travel transmission shaft 141 at a high speed via the high-speed gear 147 and the transmission gear 141a of the travel transmission shaft 141. When the shift member 149 is engaged with the low-speed gear 148, the motive power of the travel relay shaft 143 is transmitted to the travel transmission shaft 141 at a low speed via the low-speed gear 148 and the transmission gear 141b of the travel transmission shaft 141.

As a result, the motive power of the output shaft 111b of the electric motor 111 is transmitted to the rear wheels 102 via the input shaft 125, the travel clutch 139, the travel relay shaft 143, the transmission 144, the travel transmission shaft 141, and the rear-wheel differential apparatus 145. Based on the operation of the speed change pedal 135 (see FIG. 18), the electric motor 111 operates in a forward direction and a reverse direction at continuously variable speeds, and the electric tractor moves forward (forward operation of the electric motor 111) and backward (reverse operation of the electric motor 111).

### (Brake Configuration)

As shown in FIG. 25, a right brake 150 capable of braking the right rear wheel 102 and left and right brakes 150 capable of braking the left rear wheel 102 are provided in the third part 106c of the transmission case 106.

The right brake 150 and the right brake pedal 136 (see FIG. 18) are coupled via a right coordination mechanism (not shown). The left brake 150 and the left brake pedal 136 (see FIG. 18) are coupled via a left coordination mechanism (not shown).

When the operator in the driving section 108 steers the front wheels 101 to the right (left) using the steering wheel 133, depressing the right (left) brake pedal 136 applies braking to the right (left) rear wheel 102, allowing for a tight turn to the right (left).

When the electric tractor is to stop from a traveling state, or the like, in response to the operator in the driving section 108 depressing the right and left brake pedals 136 to apply braking to the right and left rear wheels 102, the depressing of the right and left brake pedals 136 is detected, and the travel clutch 139 is disengaged.

During maintenance work or the like, the operator can operate and stop the electric motor 111 while keeping the travel clutch 139 in the disengaged state.

### (Configuration of Transmission System for Transmission to Front Wheels in Transmission Case) - 1

As shown in FIGS. 19, 25, and 27, the pipe member 130 is coupled along the front-rear direction between the rear portion 115 of the housing frame 105 and the front axle case 107. The front-wheel transmission shaft 131 extends frontward from inside the third part 106c of the transmission case 106, passes through the inside of the pipe member 130, and is connected to the front-wheel differential apparatus (not shown) of the front axle case 107.

As shown in FIGS. 22 and 24, in the housing frame 105, a recess 114a that is open downward and faces upward is provided in a central part in the left-right direction of the lower part of the front portion 114.

As shown in FIGS. 22, 23, 25, and 27, in the housing frame 105, the pipe member 130 and the front-wheel transmission shaft 131 are provided in the recess 114a in the front portion 114 of the housing frame 105, and the front-wheel transmission shaft 131 is provided in the opening 115b of the rear portion 115 of the housing frame 105. The pipe member 130 and the front-wheel transmission shaft 131 are provided at the position of the virtual line L104 in a plan view.

A bearing portion 132 having a bearing is provided in the opening 115b in the rear portion 115 of the housing frame 105. The front-wheel transmission shaft 131 passes through the bearing portion 132, is supported by the bearing portion 132, and is supported by the rear portion 115 of the housing frame 105 via the bearing portion 132. The rear end portion of the pipe member 130 is attached to the bearing portion 132. In this case, the bearing portion 132 is a front-wheel transmission shaft bearing portion.

A sealing member 151 is provided in the bearing portion 132. As a result, even if the lubricating oil from the transmission case 106 tries to enter the inside of the pipe member 130 through the opening 115b in the rear portion 115 of the housing frame 105 and the bearing portion 132, it will be prevented by the sealing member 151. Even if the lubricating oil of the transmission case 106 enters the inside of the pipe member 130, the lubricating oil of the transmission case 106 cannot leave the inside of the pipe member 130. In this case, the sealing member 151 is a front-wheel transmission sealing member.

The pipe member 130 and the front-wheel transmission shaft 131 are provided between the output shaft 111b of the electric motor 111 and the output shaft 112b of the electric motor 112 in a plan view, are provided at the center in the left-right direction of the housing frame 105, and are provided directly below the frame 117 of the housing frame 105 (see FIGS. 20 to 24).

As shown in FIGS. 22 and 23, the pipe member 130 and the front-wheel transmission shaft 131 are provided at a height that overlaps with the electric motors 111 and 112 in a side view.

Specifically, the pipe member 130 and the front-wheel transmission shaft 131 are provided between the output shafts 111b and 112b of the electric motors 111 and 112 and the lower end portions of the electric motors 111 and 112 in a side view, and are provided above the frame 121 of the housing frame 105.

### (Configuration of Transmission System for Transmission to Front Wheels in Transmission Case) - 2

As shown in FIGS. 25, 26, 28, and 29, a travel relay gear 152 is rotatably attached to the PTO transmission shaft 142, and a transmission gear 141c coupled to the travel transmission shaft 141 engages with the travel relay gear 152.

The front-wheel transmission shaft 131 is attached in such a manner that a switching gear 153 can rotate and slide integrally with the front-wheel transmission shaft 131. The switching gear 153 can be slid to an engagement position of engaging with the travel relay gear 152 and to a separated position away from the travel relay gear 152.

In response to the switching gear 153 being operated to the engagement position of engaging with the travel relay gear 152, the motive power of the travel transmission shaft 141 is transmitted to the front-wheel transmission shaft 131 via the transmission gear 141c of the travel transmission shaft 141, the travel relay gear 152, and the switching gear 153, and then transmitted from the front-wheel transmission shaft 131 to the front wheels 101. This state is a 104-wheel-drive state in which the front wheels 101 and rear wheels 102 are driven.

When the switching gear 153 is operated to the separated position away from the travel relay gear 152, the motive power of the travel transmission shaft 141 is not transmitted to the front-wheel transmission shaft 131, and the front wheels 101 are not driven. This state is a rear-wheel drive state in which the rear wheels 102 are driven.

In this case, the input shaft 125, the travel clutch 139, the travel relay shaft 143, the transmission 144, the travel transmission shaft 141 and rear-wheel differential apparatus 145, the travel relay gear 152, the switching gear 153, the front-wheel transmission shaft 131, and the like are a transmission mechanism of the travel system to the front wheels 101 and the rear wheels 102.

### (Configuration of Transmission System for Transmission to PTO Shaft and Mid-PTO Shaft in Transmission Case) - 1

As shown in FIGS. 25, 26, and 29, transmission gears 154, 155, and 156 are provided at a height between the travel transmission shaft 141 and the input shaft 126, are provided between the virtual line L101 and the virtual line L102 in a plan view (rear view), and are provided between the virtual line L102 and the PTO transmission shaft 142 (travel transmission shaft 141) in a plan view (rear view).

A transmission gear 140a of the PTO clutch 140 and the transmission gear 154 engage with each other. The transmission gear 155 and the transmission gear 156 are coupled to each other in such a manner as to be integrally rotatable. The transmission gear 155 engages with the transmission gear 154, and the transmission gear 156 engages with the transmission gear 142a, which is coupled to the PTO transmission shaft 142.

A PTO relay gear 157 and a PTO relay gear 158 are coupled to each other in such a manner as to be integrally rotatable, and the PTO relay gears 157 and 158 are rotatably attached to the front-wheel transmission shaft 131. The transmission gear 142b, which is coupled to the PTO transmission shaft 142, is engaged with the PTO relay gear 157.

The transmission gear 159 is rotatably attached to the mid-PTO shaft 129, and the PTO relay gear 158 and the transmission gear 159 engage with each other. A shift member 160 is attached to the mid-PTO shaft 129 by a spline structure in such a manner as to be able to rotate and slide integrally.

### (Configuration of Transmission System for Transmission to PTO Shaft and Mid-PTO Shaft in Transmission Case) - 2

As shown in FIGS. 25, 26, and 29, the motive power of the PTO clutch 140 is transmitted to the center in the left-right direction of the transmission case 106 by the transmission gear 140a of the PTO clutch 140 and the transmission gears 154, 155, and 156, is transmitted to the PTO transmission shaft 142, and is transmitted from the PTO transmission shaft 142 to the PTO shaft 128. In this case, the transmission gear 140a of the PTO clutch 140, the transmission gear 142a of the PTO transmission shaft 142 and the transmission gears 154, 155, and 156 are a second transmission mechanism.

When the shift member 160 engages with the transmission gear 159, the motive power of the PTO transmission shaft 142 is transmitted to the mid-PTO shaft 129 via the transmission gear 142b of the PTO transmission shaft 142, the PTO relay gears 157 and 158, the transmission gear 159, and the shift member 160.

As a result, in response to the PTO clutch 140 being operated to the transmission state and the disengaged state, the PTO shaft 128 and the mid-PTO shaft 129 operate and stop. When the PTO clutch 140 is operated to the transmission state, in response to the shift member 160 being disengaged from the transmission gear 159, the mid-PTO shaft 129 stops while the PTO shaft 128 is operating.

In an electric tractor, when a work apparatus such as a rotary tilling apparatus (not shown) is attached to the rear portion of the body 103, the motive power of the PTO shaft 128 is transmitted to the work apparatus. When a work apparatus such as a mower (not shown) is attached between the front wheels 101 and the rear wheels 102 below the body 103, the motive power of the mid-PTO shaft 129 is transmitted to the work apparatus.

In this case, the PTO clutch 140, the PTO transmission shaft 142, the PTO relay gears 157 and 158, the transmission gear 159, the shift member 160, and the like are a transmission mechanism for a PTO system to the PTO shaft 128 and the mid-PTO shaft 129.

### (Configuration of Hydraulic Pump)

As shown in FIGS. 18, 19, and 25, in the first part 106a and the second part 106b of the transmission case 106, the right part of the first part 106a of the transmission case 106 extends laterally outward on the right with respect to the right part of the second part 106b. As a result, the width W101 in the left-right direction of the first part 106a of the transmission case 106 is larger than the width W102 in the left-right direction of the second part 106b of the transmission case 106.

The hydraulic pump 161 is attached facing rearward on the right part of the first part 106a of the transmission case 106. As a result, the hydraulic pump 161 is provided on the right side, which is the same side as the electric motor 112 in a plan view, with respect to the virtual line L104. The hydraulic pump 161 is provided laterally outward on the right part (same side as the electric motor 112) of the second part 106b of the transmission case 106, and is provided rearward of the right part (same side as the electric motor 112) of the rear portion 115 of the housing frame 105.

As shown in FIGS. 25 and 26, a transmission gear 162 and a transmission gear 163 are provided at the right part inside of the first part 106a of the transmission case 106. The transmission gear 126a coupled to the input shaft 126 engages with the transmission gear 162, the transmission gear 162 engages with the transmission gear 163, and the transmission gear 163 engages with an input gear 161a of the hydraulic pump 161.

The motive power of the electric motor 112 is transmitted to the hydraulic pump 161 via the transmission gear 126a of the input shaft 126 and the transmission gears 162 and 163, whereby the hydraulic pump 161 is driven. Since the PTO clutch 140 is provided downstream of the input shaft 126, the hydraulic pump 161 is driven by the electric motor 112 even when the PTO clutch 140 is operated to the disengaged state.

### (Configuration of Filter)

As shown in FIGS. 19 and 25, an outlet (not shown) for lubricating oil is provided in the left part of the second part 106b of the transmission case 106, and a filter 164 is connected to the outlet.

The filter 164 is provided laterally outward on the left part (side opposite to the electric motor 112) of the second part 106b of the transmission case 106 and is provided rearward of the left part (side opposite to the electric motor 112) of the rear portion 115 of the housing frame 105.

As shown in FIGS. 18, 19, and 25, an oil supply passage 174 is connected between the hydraulic pump 161 and the filter 164, and the oil supply passage 174 is provided along the left-right direction above the second part 106b of the transmission case 106.

The lubricating oil of the transmission case 106 passes through the filter 164 and the oil supply passage 174, and is supplied to the hydraulic pump 161 as the hydraulic fluid. The hydraulic fluid of the hydraulic pump 161 is supplied to a hydraulic device such as a power steering apparatus (not shown) equipped on the electric tractor, and the hydraulic device such as the power steering apparatus operates with use of the supplied hydraulic fluid.

### (Configuration of Front Loader Apparatus)

As shown in FIGS. 18 and 19, in the electric tractor, the front loader apparatus 165, which is a work apparatus, may be equipped. The front loader apparatus 165 includes right and left base portions 166, right and left booms 167, a bucket 168, right and left boom cylinders 169, and right and left bucket cylinders 170.

When the front loader apparatus 165 is equipped, the lower portion of the right base portion 166 of the front loader apparatus 165 is coupled to the lateral outer surface of the right attachment portion 123 of the housing frame 105, and the lower portion of the left base portion 166 is coupled to the lateral outer surface of the left attachment portion 123 of the housing frame 105.

When the base portions 166 of the front loader apparatus 165 are coupled to the attachment portions 123 of the housing frame 105, the front end portion of the right (left) front-rear frame 173 is coupled to the lateral outer surface of the right (left) base portion 166 of the front loader apparatus 165, and the rear end portion of the right (left) front-rear frame 173 is coupled to the right (left) rear axle case 106d of the transmission case 106.

As a result, the base portions 166 of the front loader apparatus 165 are interposed between the attachment portions 123 and the front end portions of the front-rear frames 173, and the attachment portions 123, the front end portions of the front-rear frames 173, and the base portions 166 of the front loader apparatus 165 are fastened and coupled together.

The right front-rear frame 173 is provided laterally outward on the right of the right inverter 124 and laterally outward on the right of the transmission case 106, and is provided laterally outward on the right of the hydraulic pump 161. The left front-rear frame 173 is provided laterally outward on the left of the left inverter 124 and laterally outward on the left of the transmission case 106, and is provided laterally outward on the left of the filter 164.

### (Configuration of Operation of Front Loader Apparatus)

As shown in FIGS. 18 and 19, a control valve unit 171 provided with a plurality of electromagnetically operated control valves is attached to the front portion of the right front-rear frame 173, and a cover 175 covering the control valve unit 171 is attached to the right front-rear frame 173. An oil passage 176 is connected to the hydraulic pump 161 and the control valve unit 171, and the hydraulic fluid of the hydraulic pump 161 is supplied to the control valve unit 171. In this case, the control valve unit 171 is a control valve.

Right and left fenders 177 are provided on the right portion and the left portion of the driving section 108 and are provided above the right and left rear wheels 102. An operation lever 172 is provided at the front portion of the upper portion of the right fender 177.

As a result, the operation lever 172 is provided on the right side in a plan view, with respect to the center portion in the left-right direction of the driving section 108, and is provided on the right side (same side as the electric motor 112) in a plan view, with respect to the center portion in the left-right direction of the driving section 108. The center portion in the left-right direction of the driving section 108 and the virtual line L104 are at approximately the same position in a plan view.

A position sensor (not shown) for detecting the operation position of the operation lever 172 is provided on the right fender 177, and the control valve of the control valve unit 171 is operated based on the operation of the operation lever 172. In this case, the operation lever 172 is a manual operation tool.

The operator in the driver's seat 134 operates the control valve of the control valve unit 171 by operating the operation lever 172 with his or her right hand. As a result, the hydraulic fluid of the hydraulic pump 161 is supplied to and discharged from the boom cylinders 169 and the bucket cylinders 170 of the front loader apparatus 165 via the control valve unit 171, whereby the boom 167 and the bucket 168 of the front loader apparatus 165 operate.

### (First Alternative Embodiment of Invention)

The housing frame 105 may be eliminated, and the electric tractor may be configured in such a manner that only a flat plate-shaped rear portion 115 (coupling portion) is provided.

According to this configuration, it is preferable that the rear portion 115 (coupling portion) is coupled to the lower portion of the floor 138. The front frame 104 preferably extends rearward, passing below the floor 138, and is coupled to the transmission case 106, and the rear portion 115 (coupling portion) is preferably coupled to the front frame 104.

According to this configuration, the electric motors 111 and 112 are coupled to the front surface of the rear portion 115 (coupling portion), and the transmission case 106 is coupled to the rear surface of the rear portion 115 (coupling portion). The base portions 166 of the front loader apparatus 165 are preferably configured to be coupled to the front frame 104.

### (Second Alternative Embodiment of Invention)

Since the electric motor 112 may require a larger output than the electric motor 111 that generates motive power for traveling, the electric motor 112 may be configured to have a larger output than the electric motor 111.

### (Third Alternative Embodiment of Invention)

The electric motor 112 may be configured to transmit motive power to the PTO shaft 128 and the mid-PTO shaft 129, but not to drive the hydraulic pump 161.

According to this configuration, the hydraulic pump 161 may be configured to be driven by an electric motor (not shown) other than the electric motors 111 and 112.

The hydraulic pump 161 may be configured to be driven by the electric motor 111. In this case, the control valve unit 171 is preferably attached to the left front-rear frame 173, and the operation lever 172 is preferably attached to the left fender 177.

### (Fourth Alternative Embodiment of Invention)

The mid-PTO shaft 129 may be eliminated.

According to this configuration, the travel transmission shaft 141 may be provided below the PTO transmission shaft 142.

### (Fifth Alternative Embodiment of Invention)

The front-wheel transmission shaft 131 may be provided above the travel transmission shaft 141.

In the space between the virtual line L101 and the virtual line L102 in a plan view, the front-wheel transmission shaft 131 may be provided between the travel transmission shaft 141 and the virtual line L101 in a plan view, or may be provided between the travel transmission shaft 141 and the virtual line L102 in a plan view.

### (Sixth Alternative Embodiment of Invention)

When the electric motors 111 and 112 are provided side by side along the left-right direction, the electric motor 111 may be provided on the right and the electric motor 112 may be provided on the left.

According to this configuration, the travel clutch 139 (virtual line L101), the travel relay shaft 143, the transmission 144, and the like are provided rightward of the travel transmission shaft 141 and the PTO transmission shaft 142 in a plan view. The PTO clutch 140 (virtual line L102), the transmission gears 154, 155, and 156, and the like are provided leftward of the travel transmission shaft 141 and the PTO transmission shaft 142 in a plan view.

### (Seventh Alternative Embodiment of Invention)

When the housing frame 105 is included or when the housing frame 105 is eliminated, the battery 110, the electric motors 111 and 112, and the housing frame 105 may be arranged such that the rear end portion of the battery 110 is provided slightly rearward of the front end portions of the electric motors 111 and 112.

### (Eighth Alternative Embodiment of Invention)

The front portions of the electric motors 111 and 112 may be coupled to the front portion 114 of the housing frame 105.

With this configuration, the casings of the electric motors 111 and 112 are part of the housing frame 105, and therefore the rigidity of the housing frame 105 is improved.

### (Ninth Alternative Embodiment of Invention)

The output shafts 111b and 112b of the electric motors 111 and 112 may be extended rearward, pass through the openings 115a in the rear portion 115 of the housing frame 105 into the interior of the transmission case 106, and may be coupled to the input shaft (not shown) of the travel clutch 139 and the input shaft (not shown) of the PTO clutch 140.

With this configuration, the output shafts 111b and 112b of the electric motors 111 and 112 pass through the bearing portions 127 and are supported by the bearing portions 127.

### (Tenth Alternative Embodiment of Invention)

If the front loader apparatus 165 is not equipped, the front-rear frames 173 may be coupled between the attachment portions 123 of the housing frame 105 and the rear axle case 106d of the transmission case 106.

### (Eleventh Alternative Embodiment of Invention)

The electric tractor may be configured as a rear-two-wheel-drive type instead of a four-wheel-drive type.

With this configuration, the pipe member 130, the front-wheel transmission shaft 131, the bearing portion 132, the sealing member 151, the opening 115b in the rear portion 115, the recess 114a in the front portion 114 of the housing frame 105, and the like are eliminated.

### (Twelfth Alternative Embodiment of Invention)

Instead of the rear wheels 102, crawler-type right and left travel apparatuses (not shown) may be attached to the transmission case 106.

The electric tractor may be configured as a hybrid electric tractor including an engine (not shown) and electric motors 111 and 112 as motive power sources instead of being configured as an electric tractor including only the electric motors 111 and 112 as motive power sources.

### (Correspondence with Claims) - 1

With the above configuration, the first electric motor 111 is included, which generates motive power for traveling, and has the output shaft 111b that faces rearward.

The second electric motor 112 is included, which generates motive power and hydraulic pressure for operating the equipped work apparatus (front loader apparatus 165), and has the output shaft 112b facing rearward.

The first electric motor 111 and the second electric motor 112 are arranged side by side along the left-right direction.

The transmission case 106 is included, which is provided rearward of the first electric motor 111 and the second electric motor 112, and to which the rear travel apparatus (rear wheels 102) is attached.

Inside the transmission case 106, the travel transmission shaft 141 is included, which is provided along the front-rear direction between a first virtual line (virtual line L101) extending rearward from the output shaft 111b of the first electric motor 111 and a second virtual line (virtual line L102) extending rearward from the output shaft 112b of the second electric motor 112 in a plan view, and which transmits motive power to the travel apparatus (rear wheels 102).

Inside the transmission case 106, the PTO transmission shaft 142 is included, which is provided along the front-rear direction at a position above or below the travel transmission shaft 141 between the first virtual line (virtual line L101) and the second virtual line (virtual line L102) in a plan view, and which transmits motive power to the work apparatus (front loader apparatus 165).

Inside the transmission case 106, the first transmission mechanism (the transmission gear 139a of the travel clutch 139 and the transmission gear 143a of the travel relay shaft 143) is included, which transmits the motive power of the output shaft 111b of the first electric motor 111 toward the center in the left-right direction of the transmission case 106 and then to the travel transmission shaft 141.

Inside the transmission case 106, the second transmission mechanism (the transmission gear 140a of the PTO clutch 140, the transmission gear 142a of the PTO transmission shaft 142, and the transmission gears 154, 155, and 156) is included, which transmits the motive power of the output shaft 112b of the second electric motor 112 toward the center in the left-right direction of the transmission case 106 and then to the PTO transmission shaft 142.

### (Correspondence with Claims) - 2

With the above configuration, in the rear portion (the third part 106c) of the transmission case 106 that houses the travel transmission shaft 141 and the PTO transmission shaft 142, and the front portion (the first part 106a and the second part 106b) of the transmission case 106 that houses the first transmission mechanism (the transmission gear 139a of the travel clutch 139 and the transmission gear 143a of the travel relay shaft 143) and the second transmission mechanism (the transmission gear 140a of the PTO clutch 140, the transmission gear 142a of the PTO transmission shaft 142, and the transmission gears 154, 155, and 156), the width W103 in the left-right direction of the rear portion (the third part 106c) of the transmission case 106 is smaller than the widths W101 and W102 in the left-right direction of the front portion (the first part 106a and the second part 106b) of the transmission case 106.

Inside the transmission case 106, the travel relay shaft 143 that is provided along the front-rear direction between the first virtual line (virtual line L101) and the second virtual line (virtual line L102) in a plan view, and the transmission 144 provided across the travel relay shaft 143 and the travel transmission shaft 141 are included.

The motive power of the output shaft 111b of the first electric motor 111 is transmitted from the first transmission mechanism (the transmission gear 139a of the travel clutch 139 and the transmission gear 143a of the travel relay shaft 143) to the travel relay shaft 143, and is transmitted from the travel relay shaft 143 to the travel transmission shaft 141 through the transmission 144.

The travel relay shaft 143 is provided between the first virtual line (virtual line L101) and the travel transmission shaft 141 in a plan view.

Inside the transmission case 106, the front-wheel transmission shaft 131 is included, which is provided along the front-rear direction at a position above or below the travel transmission shaft 141 between the first virtual line (virtual line L101) and the second virtual line (virtual line L102) in a plan view, and which transmits motive power to the front wheels 101 for traveling.

The motive power of the travel transmission shaft 141 is transmitted to the front-wheel transmission shaft 131.

The PTO transmission shaft 142 is provided below the travel transmission shaft 141, and the front-wheel transmission shaft 131 is provided below the PTO transmission shaft 142.

The travel relay gear 152 is included, which is rotatably attached to the PTO transmission shaft 142.

The motive power of the travel transmission shaft 141 is transmitted to the travel relay gear 152, and is transmitted from the travel relay gear 152 to the front-wheel transmission shaft 131.

### (Correspondence with Claims) - 3

With the above configuration, the mid-PTO shaft 129 is included, which is provided at the bottom portion of the transmission case 106.

The PTO transmission shaft 142 is provided below the travel transmission shaft 141, and the motive power of the PTO transmission shaft 142 is transmitted to the mid-PTO shaft 129.

Inside the transmission case 106, the front-wheel transmission shaft 131 is included, which is provided along the front-rear direction at a position below the PTO transmission shaft 142 between the first virtual line (virtual line L101) and the second virtual line (virtual line L102) in a plan view, and which transmits motive power to the front wheels 101 for traveling.

The PTO relay gears 157 and 158 are included, which are rotatably attached to the front-wheel transmission shaft 131.

The motive power of the travel transmission shaft 141 is transmitted to the front-wheel transmission shaft 131.

The motive power of the PTO transmission shaft 142 is transmitted to the PTO relay gears 157 and 158, and is transmitted from the PTO relay gears 157 and 158 to the mid-PTO shaft 129.

### Industrial Applicability

The present invention can be applied to an electric tractor.

### Description of Reference Signs

1 Front wheel
2 Rear wheel (rear travel apparatus)
5 Housing frame
6 Transmission case
11 Electric motor (first electric motor)
11b Output shaft of electric motor (first electric motor)
12 Electric motor (second electric motor)
11b Output shaft of electric motor (first electric motor)
14 Front portion of housing frame
15 Rear portion of housing frame
16 Lateral portion (right portion) (left portion) of housing frame
17 Frame (upper frame)
21 Frame (lower frame)
31 Front-wheel transmission shaft
32 Bearing portion
65 Front loader apparatus (work apparatus)
75 Backhoe apparatus (work apparatus)
101 Front wheel
102 Rear wheel (rear travel apparatus)
106 Transmission case
106a First part of transmission case (front portion of transmission case)
106b Second part of transmission case (front portion of transmission case)
106c Third part of transmission case (rear portion of transmission case)
111 Electric motor
111b Output shaft of electric motor
112 Electric motor
112b Output shaft of electric motor
129 Mid-PTO shaft
131 Front-wheel transmission shaft
139a Transmission gear of travel clutch (first transmission mechanism)
140a Transmission gear of PTO clutch (second transmission mechanism)
141 Travel transmission shaft
142 PTO transmission shaft
142a Transmission gear of PTO transmission shaft (second transmission mechanism)
143 Travel relay shaft
143a Transmission gear of travel relay shaft (first transmission mechanism)
144 Transmission
152 Travel relay gear
154 Transmission gear (second transmission mechanism)
155 Transmission gear (second transmission mechanism)
156 Transmission gear (second transmission mechanism)
157 PTO relay gear
158 PTO relay gear
165 Front loader apparatus (work apparatus)
L101 Virtual line (first virtual line)
L102 Virtual line (second virtual line)
W101 Width in left-right direction of first part of transmission case (width in left-right direction of front portion of transmission case)
W102 Width in left-right direction of second part of transmission case (width in left-right direction of front portion of transmission case)
W103 Width in left-right direction of third part of transmission case (width in left-right direction of rear portion of transmission case)

## Claims

1. An electric tractor comprising:
a first electric motor having an output shaft facing rearward;
a second electric motor having an output shaft facing rearward;
a front wheel for traveling provided frontward of the first electric motor and the second electric motor;
a transmission case provided rearward of the first electric motor and the second electric motor, and to which a rear travel apparatus is attached;
a transmission mechanism provided inside the transmission case and configured to transmit transmitted motive power to the travel apparatus; and
a front-wheel transmission shaft configured to transmit motive power branched from the transmission mechanism to the front wheel,
the first electric motor and the second electric motor being arranged side by side along a left-right direction, and
the front-wheel transmission shaft extending frontward from the transmission case, passing between the output shaft of the first electric motor and the output shaft of the second electric motor in a plan view.

2. The electric tractor according to claim 1,
wherein the first electric motor generates motive power for traveling, and
the second electric motor generates motive power and hydraulic pressure for operating an equipped work apparatus.

3. The electric tractor according to claim 1 or 2,
wherein the front-wheel transmission shaft is provided at a height overlapping with the first electric motor and the second electric motor in a side view.

4. The electric tractor according to any one of claims 1 to 3 further comprising
a housing frame housing the first electric motor and the second electric motor,
wherein the front-wheel transmission shaft passes through a front portion and a rear portion of the housing frame, and
at least either the front portion or the rear portion of the housing frame is provided with a bearing portion that supports the front-wheel transmission shaft.

5. The electric tractor according to claim 4, further comprising
an upper frame provided above the front-wheel transmission shaft and coupled along the front-rear direction between the front portion and the rear portion of the housing frame.

6. The electric tractor according to claim 4, further comprising
a lower frame provided below the front-wheel transmission shaft and coupled along the left-right direction between the right portion and the left portion of the housing frame.

7. An electric tractor comprising:
a first electric motor configured to generate motive power for traveling, and having an output shaft facing rearward; and
a second electric motor configured to generate motive power and hydraulic pressure for operating an equipped work apparatus, and having an output shaft facing rearward,
the first electric motor and the second electric motor being arranged side by side along a left-right direction,
the electric tractor further comprising a transmission case provided rearward of the first electric motor and the second electric motor, and to which a rear travel apparatus is attached, and
inside the transmission case, the electric tractor further comprising:
a travel transmission shaft that is provided along a front-rear direction between a first virtual line extending rearward from the output shaft of the first electric motor and a second virtual line extending rearward from the output shaft of the second electric motor in a plan view, and is configured to transmit motive power to the travel apparatus;
a PTO transmission shaft that is provided along the front-rear direction at a position above or below the travel transmission shaft between the first virtual line and the second virtual line in a plan view, and is configured to transmit motive power to the work apparatus;
a first transmission mechanism configured to transmit the motive power of the output shaft of the first electric motor toward a center in the left-right direction of the transmission case and then to the travel transmission shaft; and
a second transmission mechanism configured to transmit the motive power of the output shaft of the second electric motor toward the center in the left-right direction of the transmission case and then to the PTO transmission shaft.

8. The electric tractor according to claim 7,
wherein in a rear portion of the transmission case that houses the travel transmission shaft and the PTO transmission shaft, and in a front portion of the transmission case that houses the first transmission mechanism and the second transmission mechanism,
a width in the left-right direction of the rear portion of the transmission case is smaller than a width in the left-right direction of the front portion of the transmission case.

9. The electric tractor according to claim 7 or 8,
wherein inside the transmission case, the electric tractor further comprises: a travel relay shaft provided along a front-rear direction between the first virtual line and the second virtual line in a plan view; and a transmission provided across the travel relay shaft and the travel transmission shaft, and
the motive power of the output shaft of the first electric motor is transmitted from the first transmission mechanism to the travel relay shaft, and is transmitted from the travel relay shaft to the travel transmission shaft through the transmission.

10. The electric tractor according to claim 9,
wherein the travel relay shaft is provided between the first virtual line and the travel transmission shaft in a plan view.

11. The electric tractor according to any one of claims 7 to 10,
wherein inside the transmission case, the electric tractor further comprises a front-wheel transmission shaft that is provided along a front-rear direction at a position above or below the travel transmission shaft between the first virtual line and the second virtual line in a plan view, and is configured to transmit motive power to a front wheel for traveling, and
the motive power of the travel transmission shaft is transmitted to the front-wheel transmission shaft.

12. The electric tractor according to claim 11,
wherein the PTO transmission shaft is provided below the travel transmission shaft,
the front-wheel transmission shaft is provided below the PTO transmission shaft,
the electric tractor further comprises a travel relay gear rotatably attached to the PTO transmission shaft, and
the motive power of the travel transmission shaft is transmitted to the travel relay gear, and is transmitted from the travel relay gear to the front-wheel transmission shaft.

13. The electric tractor according to any one of claims 7 to 12, further comprising
a mid-PTO shaft provided at a bottom portion of the transmission case,
wherein the PTO transmission shaft is provided below the travel transmission shaft, and the motive power of the PTO transmission shaft is transmitted to the mid-PTO shaft.

14. The electric tractor according to claim 13,
wherein inside the transmission case, the electric tractor further comprises: a front-wheel transmission shaft that is provided along a front-rear direction at a position below the PTO transmission shaft between the first virtual line and the second virtual line in a plan view, and is configured to transmit motive power to a front wheel for traveling; and
a PTO relay gear rotatably attached to the front-wheel transmission shaft,
the motive power of the travel transmission shaft is transmitted to the front-wheel transmission shaft, and
the motive power of the PTO transmission shaft is transmitted to the PTO relay gear, and is transmitted from the PTO relay gear to the mid-PTO shaft.
